(19) Europäisches Patentamt
European Patent Office
Office européen des brevets

(11) EP 1 960 465 B1

(12) EUROPEAN PATENT SPECIFICATION

(45) Date of publication and mention of the grant of the patent:
**23.01.2013 Bulletin 2013/04**

(21) Application number: **06824933.3**

(22) Date of filing: **12.09.2006**

(51) Int Cl.:
***C08L 23/08*** *(2006.01)* ***C08L 75/04*** *(2006.01)*

(86) International application number:
**PCT/US2006/035384**

(87) International publication number:
**WO 2007/033115 (22.03.2007 Gazette 2007/12)**

(54) **AUTOMOTIVE PARTS PREPARED FROM ETHYLENE/ALPHA -OLEFINS COMPOSITIONS**

AUS ETHYLEN/ALPHA-OLEFIN-ZUSAMMENSETZUNGEN HERGESTELLTE AUTOTEILE

PIÈCES D'AUTOMOBILE PRÉPARÉES À PARTIR DE COMPOSITIONS D'ÉTHYLÈNE ET D'ALPHA-OLÉFINES

(84) Designated Contracting States:
**AT BE BG CH CY CZ DE DK EE ES FI FR GB GR HU IE IS IT LI LT LU LV MC NL PL PT RO SE SI SK TR**

(30) Priority: **12.09.2005 US 716266 P**

(43) Date of publication of application:
**27.08.2008 Bulletin 2008/35**

(73) Proprietor: **Dow Global Technologies LLC**
**Midland, MI 48674 (US)**

(72) Inventors:
- **WEAVER, Laura, Bauerle**
  **Lake Jackson, TX 77566 (US)**
- **REIGHARD, Robert, P.**
  **Toledo, OH 43523 (US)**

(74) Representative: **Hull, John Philip et al**
**Beck Greener**
**Fulwood House**
**12 Fulwood Place**
**London WC1V 6HR (GB)**

(56) References cited:
**WO-A-01/36535**
**WO-A-2005/090426**
**WO-A-2006/102154**
**US-A- 6 156 842**
**US-B1- 6 251 982**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 960 465 B1

## Description

FIELD OF THE INVENTION

The invention relates to automotive parts comprising at least one component formed from an ethylene/α-olefin composition. The compositions comprise an ethylene/α-olefin random interpolymer and a polydiene diol-based polyurethane.

BACKGROUND

In North America, approximately 25 million 1b (11 million kg) of flexible polyvinyl chloride (f-PVC) goes into thermoformed sheeting for automotive applications, such as instrument and door panels. Such sheeting is grained and is color matched with other interior components. Sheeting for automotive applications has to meet several end-use requirements. Key end-use requirements include a low gloss value, a high surface scratch/mar resistance, high heat resistance and good cold temperature impact resistance. In addition, the sheeting must have good adhesion to any intermediate polyurethane (PU) foam layer, for example a foam layer used to provide a softening or cushioning effect to an automotive panel.

The polymeric sheets or skins must be of low gloss, or low glare, especially, if the sheet is placed under a window, such as, in the instrument panel (IP), under the front window of an automobile. Moreover, the gloss of the material must remain low over the vehicle life-time. The gloss of a material is typically determined by measuring reflected light at specified angles, and a typical test measurement is done at 60 degrees. The reflection measurements are converted into gloss values, and these values are typically less than, or equal to, 2, for automotive applications. Flexible or plasticized polyvinyl chloride typically has high gloss values. To reduce the gloss of flexible polyvinylchloride, to acceptable levels for automotive applications, a liquid polyurethane top-coating is typically applied.

Thermoplastic polyolefins (TPOs) sheets can also be used in automotive applications. Thermoplastic polyolefin sheets or skins generally have lower gloss values compared to flexible polyvinyl chloride, but are also polyurethane top-coated to primarily enhance the surface scratch/mar characteristics, and with the secondary benefit of lowering the gloss value. New surface graining technologies (for example, micro-graining, imparted from a grained roller surface to the extruded sheet, during an extrusion) are emerging, however, which will allow for consistent gloss control over a wide variety of grain patterns. These new technologies could foreseeably eliminate the need for PU top-coating of polyolefins that have the right amount of scratch/mar resistance to meet the application requirements. Examples of such new technologies are described in U.S. Patent 5,902,854.

Another end-use requirement is that the sheeting (f-PVC or TPO) needs to withstand the upper service temperatures experienced in the auto interiors, especially in the heat of the summer. The current criterion is that the sheeting withstand a temperature of 120°C, without melting, distorting, becoming tacky, or exhibiting other physical changes. Concurrent with this requirement, is the necessity that the sheeting provide good impact properties at low temperatures, such as at -40°C. This property is particular important when such sheeting is used to form seamless airbags (occupant safety during airbag deployment in winter is of paramount importance; no flying debris is the criteria). The glass transition temperature (Tg) of polyvinyl chloride is typically -20°C to -30°C, and thus, this polymer has impaired cold temperature impact properties at temperatures lower than its Tg. Thermoplastic polyolefins, however, typically have lower glass transition temperatures, compared to that of polyvinyl chloride, and thus, have better cold temperature impact properties. Thermoplastic polyolefins are typically the material of choice for seamless airbags and other safety devices, which deploy during a vehicular impact, particularly in cold climates.

Thermoplastic polyolefins also have better long-term durability compared to flexible polyvinyl chloride, as shown by little change in rheological and/or mechanical properties upon heat aging at 120°C in the TPOs. At 120°C, polyvinyl chloride typically loses plasticizer, and therefore loses elongation (elasticity), and becomes brittle and prone to cracking.

Thermoplastic olefin (TPO) sheeting is increasingly being used for soft covered instrument panels and door panels. The typical assembly process requires joining together, in a molding process, a thermoformed flexible thermoplastic polyolefin skin and a hard surface substrate, by forming a polyurethane foam between the two layers. The hard surface substrate is typically composed of a thermoplastic polyolefin, an acrylonitrile-butadiene-styrene (ABS) or an acrylonitrile-butadiene-styrene/polycarbonate (ABS/PC) blend. In instrument panel applications, the ABS and ABS/PC substrates are being replaced by hard TPOs, which are usually reinforced with a filler. A polyurethane precursor mixture (a liquid isocyanate, a liquid polyol and catalyst) is injected between the TPO skin and the hard surface, and then reacted to form a foamed, intermediate layer.

Thermoplastic polyolefins, due to their nonpolar nature, generally lack adhesion to polar materials, such as polyurethanes. Thus, a flexible thermoplastic olefin sheet is conventionally surface treated with a primer solution, containing one or more polar compounds, to increase the adhesion to a polyurethane surface. Typical primer solutions contain a chlorinated maleated polyolefin. Such a surface treatment requires a large ventilation area, equipped to handle

sheeting through a gravure application; a primer application mechanism, such as a dip tank; and a drying means to flash off the water and other solvent carriers. In addition, the flexible thermoplastic olefin skin must adhere, without voids and other visible defects, to the polyurethane foam. The polyurethane foam should adhere to the thermoplastic polyolefin surface, without delamination at the interface (or adhesive failure). A discontinuous application of a primer solution may lead to the formation of voids between the thermoplastic olefin skin and polyurethane foam in areas that lack the primer. Surface voids are a costly problem for automotive parts manufacturers, since parts that have surface voids cannot be used in an automotive assembly, and are instead scraped.

International Publication No. 2005/090426 discloses copolymers, especially multiblock copolymer, containing therein two or more segments or blocks, differing in chemical or physical properties, and which are prepared by polymerizing propylene, 4-methyl-1-pentene, or other $C_4$-$C_8$ $\alpha$-olefin and one or more copolymerizable comonomers, especially ethylene in the presence of a composition comprising the admixture or reaction product resulting from combining: (A) a first metal complex olefin polymerization catalyst, (B) a second metal complex olefin polymerization catalyst capable of preparing polymers differing in chemical or physical properties from the polymer prepared by catalyst (A) under equivalent polymerization conditions, and (C) a chain shuttling agent.

International Publication No. 2006/102154 discloses polymer blends that comprise: 1) at least one ethylene/$\alpha$-olefin interpolymer, and 2) at least one polyolefin, or at least one styrenic block copolymer, or a combination thereof. Such polyolefins include, but are not limited to, high melt strength, high density polyethylene and high melt strength polypropylene. The ethylene/$\alpha$-olefin interpolymers are random block copolymers, comprising at least a hard block and at least a soft block. The polyolefins can be homopolymers or interpolymers. The resulting polymer blends can be used to make flexible molded articles.

U.S. Patent 6,156,842 pertains to structures and fabricated articles having shape/reshape behavior (and processes for their preparation) comprising:

(A) from about 1 to 100 wt % (based on the combined weights of Components A and B) of at least one substantially random interpolymer having an 12 of 0.1 to about 1,000 g/10 min and an Mw/Mn from about 1.5 to about 20, and which comprises:

(1) from about 38 to about 65 mol % of polymer units derived from:

(a) at least one vinyl or vinylidene aromatic monomer, or
(b) at least one hindered aliphatic or cycloaliphatic vinyl or vinylidene monomer, or
(c) a combination of at least one aromatic vinyl or vinylidene monomer and at least one hindered aliphatic or cycloaliphatic vinyl or vinylidene monomer, and

(2) from about 35 to about 62 mol % of polymer units derived from ethylene and/or at least one $C_3$-$C_{20}$ $\alpha$-olefin; and

(B) from 0 to about 99 wt % (based on the combined weights of Components A and B) of at least one polymer other than that of Component A; and (C) from 0 to about 50 % by weight (based on the combined weights of components A, B, C and D of at least one tackifier; and
(D) from 0 to about 80% by weight (based on the combined weights of components A, B, C and D) of at least one filler.

There is a need to develop suitable thermoplastic polyolefin compositions, which can be formed to sheets that do not require a polyurethane top-coating for gloss or scratch control, and which have good adhesion to polyurethane foams. In addition, it is preferred that the sheeting, formed from such compositions, have an adhesive back layer, which allows the thermoformed sheet to be adhered to an intermediate polyurethane (thermoset) foam layer, formed from reactant precursors that can be injection between the sheet and a thermoplastic substrate, and reacted, without issue. There is also a need to develop a weatherable, low gloss and/or good scratch mar resistance top layer, formed from a composition which can be co-extruded with a flexible thermoplastic olefin composition to form a film or sheet containing at least two layers. Such a co-extruded sheet would reduce costly manufacturing steps and environmental issues, both associated with primer solutions, and would provide a thermoplastic olefin skin with improved surface properties. At least some of these needs and others have been satisfied by the following invention.

## SUMMARY OF THE INVENTION

The invention provides for an automotive part, comprising at least one component formed from a composition, comprising at least one ethylene/$\alpha$-olefin random interpolymer and at least one polydiene diol-based polyurethane, and wherein the at least one ethylene/$\alpha$-olefin interpolymer has a PRR from 8 to 70, and a density less than, or equal to, 0.93 g/cc. Said compositions are claimed *per se* in EP 1926773 granted on copending European Patent Application No.

06814482.3 having the same priority and filing dates as the present application.

DESCRIPTION OF THE DRAWINGS

Figure 1 shows the surface result from a foam peel test on a foam sample containing an extruded sheet, prepared from a composition containing an ethylene/butene-1 random copolymer and a polybutadiene diol-based polyurethane, and which is adhered to a polyurethane foam.

Figure 2 shows surface results from a foam peel test a foam sample containing a compression molded sheet, prepared from a composition containing an ethylene/butene-1 random copolymer and a polybutadiene diol-based polyurethane, and which is adhered to a polyurethane foam.

Figures 3 and 4 depict transmission electron micrographs of an extruded blend of a 50/50 ethylene/butene-1 random copolymer/polybutadiene diol-based polyurethane composition.

Figures 5 and 6 depict transmission electron micrographs of an extruded blend of a 75/25 ethylene/butene-1 random copolymer/polybutadiene diol-based polyurethane composition.

Figures 7 and 8 depict transmission electron micrographs of an extruded blend of a 25/75 ethylene/butene-1 random copolymer/polybutadiene diol-based polyurethane composition.

DETAILED DESCRIPTION OF THE INVENTION

The invention provides for an automotive part comprising at least one component formed from a composition comprising at least one ethylene/α-olefin random interpolymer and at least one polydiene diol-based polyurethane ("composition of the invention"). The compositions of the invention are particularly suited for the manufacture of automotive thermoforming parts, such as instrument panels and door panels. The compositions of the invention are also suitable for laminated sheets for use in automotive applications.

As discussed above, the invention provides an automotive part, comprising at least one component prepared from a composition comprising at least one ethylene/α-olefin random interpolymer and at least one polydiene diol-based polyurethane, and wherein the at least one ethylene/α-olefin interpolyrner has a PRR from 8 to 70- , and a density less than, or equal to, 0.93 g/cc. In a further embodiment, the part is an automotive interior part. In another embodiment, the part is an instrument panel skin. In another embodiment, the part is a door panel skin. In another embodiment, the part is a foamed laminated sheet.

The invention also provides an automotive interior part, comprising a film, said film comprising at least two layers or plies, and wherein at least one layer or ply is formed from a composition comprising at least one ethylene/α-olefin random interpolymer and at least one polydiene diol-based polyurethane, and wherein the at least one ethylene/α-olefin interpolymer has a PRR from 8 to 70, and a density less than, or equal to, 0.93 g/cc.

The invention also provides an instrument panel, comprising a film, said film comprising at least two layers or plies, and wherein at least one layer or ply is formed from a composition comprising at least one ethylene/α-olefin random interpolymer and at least one polydiene diol-based polyurethane, and wherein the at least one ethylene/α-olefin interpolymer has a PRR from 8 to 70, and a density less than, or equal to, 0.93 g/cc.

The invention also provides a door panel, comprising a film, said film comprising at least two layers or plies, and wherein at least one layer or ply is formed from a composition comprising at least one ethylene/α-olefin random interpolymer and at least one polydiene diol-based polyurethane, and wherein the at least one ethylene/α-olefin interpolymer has a PRR from 8 to 70, and a density less than, or equal to, 0.93 g/cc.

The invention also provides an interior automotive part comprising at least one component formed from the following: (a) a film comprising at least two layers or plies, and wherein at least one layer or ply is formed from a composition comprising at least one ethylene/α-olefin random interpolymer and at least one polydiene diol-based polyurethane, and wherein the at least one ethylene/α-olefin interpolymer has a PRR from 8 to 70, and a density less than, or equal to, 0.93 g/cc, and (b) a polyurethane foam. In a further embodiment, the film is adhered to a surface of the polyurethane foam. The invention also provides an instrument panel comprising such a part. In another embodiment, the adhesion between the film and the polyurethane foam is stronger than the adhesion between the foam and another film, prepared from a composition comprising the same components of the film, except the polydiene diol-based polyurethane.

In particular, the composition contains at least one ethylene/α-olefin random interpolymer and at least one polydiene diol-based polyurethane, and where the at least one ethylene/α-olefin random interpolymer has a PRR from 8 to 70, and a density less than, or equal to, 0.93 g/cc. All individual PRR values and subranges from 8 to 70 are included herein and disclosed herein. This composition may further contain at least one propylene-based polymer, selected from the group consisting of polypropylene homopolymers and propylene/α-olefin interpolymers.

In one embodiment, the at least one polydiene diol-based polyurethane is formed from a nonhydrogenated polydiene diol. In another embodiment, the at least one polydiene diol-based polyurethane is formed from a hydrogenated polydiene diol. In another embodiment, the at least one polydiene diol-based polyurethane is formed from a partially hydrogenated polydiene diol.

In one embodiment, the ethylene/α-olefin random copolymer is present as a continuous or co-continuous phase with the polydiene diol-based polyurethane.

In another embodiment, the ethylene/α-olefin random copolymer is present as a discreet phase within the polydiene diol-based polyurethane.

In another embodiment, the ethylene/α-olefin random copolymer is present as a discontinuous phase or dispersed domains within a continuous phase or matrix of the polydiene diol-based polyurethane. In one embodiment, the dispersed ethylene/α-olefin domains range in length from 0.2 microns to greater than 18 microns. In another embodiment, the dispersed ethylene/α-olefin domains range in length from 0.5 microns to greater than 18 microns. In another embodiment, the dispersed ethylene/α-olefin domains range in length from 0.2 microns to 40 microns. In another embodiment, the dispersed ethylene/α-olefin domains range in length from 0.5 microns to 20 microns. In yet another embodiment, the dispersed ethylene/α-olefin domains range in width from 0.01 microns to 20 microns, preferably from 0.1 microns to 10 microns, and more preferably from 0.5 microns to 7 microns.

In another embodiment, the ethylene/α-olefin random copolymer is present as a non-oriented discontinuous phase or dispersed domains within a continuous phase or matrix of the polydiene diol-based polyurethane. In one embodiment, the dispersed ethylene/α-olefin domains range in length from 0.2 microns to greater than 10 microns. In another embodiment, the dispersed ethylene/α-olefin domains range in length from 0.2 microns to 20 microns, and preferably from 0.5 microns to 10 microns. In another embodiment, the dispersed ethylene/α-olefin domains range in width from 0.01 microns to 20 microns, preferably from 0.05 microns to 10 microns, and more preferably from 0.1 microns to 7 microns.

In another embodiment, the polydiene diol-based polyurethane is present as an oriented discontinuous phase or dispersed domains within a continuous phase or matrix of ethylene/α-olefin random copolymer. In one embodiment, the dispersed polyurethane domains range in length from 0.2 microns to greater than 29 microns. In another embodiment, the dispersed polyurethane domains range in length from 0.5 microns to greater than 29 microns. In another embodiment, the dispersed polyurethane domains range in width from 0.001 microns to 5 microns, preferably from 0.01 microns to 2 microns, and more preferably from 0.05 microns to 1 microns.

In one embodiment, the compositions are used as an adhesive back-layer or tie layer, for the joining of incompatible resins; for example, for joining a polyolefin layer, such as a thermoformed TPO sheet, and a polyurethane layer.

In another embodiment, the compositions of the invention are prepared without the need for, and thus do not contain, a compatibilizer, including, but not limited to, a maleic anhydride grafted polyolefin (elastomer or polypropylene); other functionalized polymers, and their reaction products, as described in U.S. Patent 6,414,081; and block copolymers containing blocks of a monoalkylene arene and either hydrogenated or nonhydrogenated conjugated diene as described in U.S. Patent 5,623,019. Such compatibilizers are typically required in conventional polyolefin/polyurethane compositions. In another embodiment, the compositions of the invention are prepared without the need for an oil, and in particular, without the need for (thus do not contain) a nonpolar-extender oil, as described in U.S. Patent 6,251,982. In another embodiment, the compositions do not contain a dispersant, including, but not limited to, small molecules and oligomers containing polar functional groups such as hydroxyl, amino, carboxylic acid, and others, as described in U.S. Patent 5,364,908.

In another embodiment, the polydiene diol-based polyurethane may be hydrogenated to increase the ultraviolet (UV) stability of the composition, and thus, may be used as an exterior or top layer in a multi-layered sheeting.

The invention also provides for other embodiments, as described herein, and for combinations of two or more embodiments.

As discussed above, the invention provides for automotive articles comprising at least one component prepared from a composition of the invention as discussed herein. Such articles include, but are not limited to, automotive parts, such as instrument panels, door panels, bumper fascia, body side molding and exterior and interior trim. Such articles can be prepared by one or more respective operations, including, but not limited to, extrusion, thermoforming, blow molding, injection molding, foaming and calendaring process.

In another embodiment of the invention, an automotive article is provided, containing a film of the composition of the invention and a polyurethane foam, and wherein the film is adhered to a surface of the polyurethane foam. Such an article may be an instrument panel. In a further embodiment, the adhesion between the film and the polyurethane foam is stronger than the adhesion between the foam and another film, prepared from a composition comprising the same components of the film, except the polydiene diol-based polyurethane.

In another embodiment, a film is used, containing at least one layer, formed from a composition of the invention as described herein. In another embodiment of the invention, a film is used, containing at least two layers or plies, and wherein at least one layer or ply is formed from a composition of the invention, as described herein. In another aspect

of the invention, such a film is formed by co-extrusion or lamination. Such a film may contain one or more morphological features as described herein. An automotive article containing at least one component, containing such a film, or formed from such a film, is also provided. Such articles include, but are not limited to, automotive interior parts, panel skins, bumper fascia, body side molding and exterior and interior trim. Such articles may be prepared by the respective processes as discussed herein.

In another embodiment of the invention, a film is used, comprising at least three layers or plies, and wherein at least one layer or ply is formed from a composition of the invention, as described herein. In another aspect of the invention, such a film is formed by co-extrusion or lamination. Such a film may contain one or more morphological features as described herein. An automotive article containing at least one component, containing such a film, or formed from such a film, is also provided. Such articles include, but are not limited to, automotive interior parts, panel skins, bumper fascia, body side molding and exterior and interior trim. Such articles may be prepared by the respective processes as discussed herein.

In yet another embodiment of the invention, a film is used, containing at least two layers, and wherein at least one layer is formed from a composition of the invention, and wherein at least one other layer is formed from a rheology-modified, substantially gel-free thermoplastic elastomer composition, said elastomer composition comprising an ethylene/$\alpha$-olefin polymer, or ethylene/$\alpha$-olefin polymer blend, and at least one polymer, selected from the group consisting of polypropylene homopolymers and propylene/ethylene copolymers, and
wherein the elastomer composition has a combination of at least three of the following four characteristics:

a shear thinning index of at least 20,
a melt strength that is at least 1.5 times that of the composition without rheology modification,
a solidification temperature that is at least 10°C greater than that of the composition without rheology modification, and
an upper service temperature limit that is at least 10°C greater than that of the composition without rheology modification. In one embodiment, the rheology is modified by means of one or more free radical generating compounds, radiation, heat, or a combination thereof. In another embodiment, the thermoplastic elastomer composition has an insoluble gel content less than 10 percent, preferably less than 5 percent, still more preferably less than 2 percent, and even more preferably less than 0.5 percent, and most preferably less than detectable limits when using xylene as the so lvent. The invention further provides for an automotive article, comprising such a film, or formed from such a film.

In another embodiment, the invention uses a film, containing at least two layers, and wherein at least one layer is formed from a composition of the invention, and
wherein at least one other layer is formed from a composition comprising a ethylene/$\alpha$-olefin random interpolymer that has a melt strength greater than, or equal to, 5 cN. The invention further provides for an automotive article, comprising such a film, or formed from such a film.

In particular, the invention provides an automotive interior part comprising at least one component formed from a composition of the invention. In a further embodiment, the automotive part is an interior automotive part. In a further embodiment, the part is an instrument panel skin or a door panel skin. In another embodiment, the part is a foamed laminated sheet.

In another embodiment, the invention provides an automotive interior part, comprising a film, said film comprising at least two layers or plies, and wherein at least one layer or ply is formed from a composition of the invention.

In another embodiment, the invention provides an instrument panel, comprising a film, said film comprising at least two layers or plies, and wherein at least one layer or ply is formed from a composition of the invention.

In another embodiment, the invention provides a door panel, comprising a film, said film comprising at least two layers or plies, and wherein at least one layer or ply is formed from a composition of the invention.

In another embodiment, the invention provides an interior automotive part comprising at least one component formed from the following: (a) a film comprising at least two layers or plies, and wherein at least one layer or ply is formed from composition of the invention, and (b) a polyurethane foam. In a further embodiment, the film is adhered to a surface of the polyurethane foam. In yet a further embodiment, the invention provides an instrument panel comprising the part comprising the film adhered to the polyurethane foam. In another embodiment, the adhesion between the film and the polyurethane foam is stronger than the adhesion between the foam and another film, prepared from a composition comprising the same components of the film, except the polydiene diol-based polyurethane.

## Compositions of the Invention

The compositions of this invention contain at least one ethylene/$\alpha$-olefin random interpolymer and at least one polydiene diol-based polyurethane. In one embodiment, the ethylene/$\alpha$-olefin interpolymer is present in an amount greater than, or equal to, 50 weight percent, and the polydiene diol-based polyurethane in an amount less than, or equal

to, 50 weight percent, and where both percentages are based on the combined weight of the ethylene/$\alpha$-olefin random interpolymer and the polydiene diol-based polyurethane. The amounts are preferably from 50 to 90 weight percent ethylene/$\alpha$-olefin random interpolymer, and from 50 to 10 weight percent polydiene diol-based polyurethane, and more preferably from 50 to 85 weight percent ethylene/$\alpha$-olefin random interpolymer, and from 50 to 15 weight percent polydiene diol-based polyurethane. In another embodiment, the composition comprises 55 to 80 weight percent of the ethylene/$\alpha$-olefin random interpolymer, and 45 to 20 weight percent of the polydiene diol-based polyurethane. The amounts are chosen to total 100 weight percent. All individual values and subranges from 50 to 90 weight percent ethylene/$\alpha$-olefin random interpolymer are included herein and disclosed herein. All individual values and subranges from 50 to 10 weight percent polydiene diol-based polyurethane are included herein and disclosed herein.

Preferred compositions of this invention comprise 50 weight percent or more, and preferably 60 weight percent or more of the ethylene/$\alpha$-olefin, and 50 weight percent or less and preferably 40 weight percent or less of the polydiene diol-based polyurethane. In one embodiment, the composition comprises from 50 weight percent to 80 weight percent, and preferably from 55 weight percent to 77 weight percent, of the ethylene/$\alpha$-olefin; and 20 weight percent to 50 weight percent, and preferably from 23 to 45 weight percent of the polydiene diol-based polyurethane; and where both percentages are based on the combined weight of the ethylene/$\alpha$-olefin random interpolymer and the polydiene diol-based polyurethane.

In another embodiment, the compositions of the invention comprise greater than 85 weight percent, preferably greater than 90 weight percent, and more preferably greater than 95 weight percent, based on the total weight of the composition, of the combined weight of the ethylene/$\alpha$-olefin random interpolymer and the polydiene diol-based polyurethane.

In one embodiment, the compositions of the invention have a melt index ($I_2$) from 0.01 g/10 min to 100 g/10 min, preferably from 0.1 g/10 min to 50 g/10 min, and more preferably from 1 g/10 min to 40 g/10 min, as determined using ASTM D-1238 (190°C, 2.16 kg load). All individual values and subranges from 0.01 g/10 min to 100 g/10 min are included herein and disclosed herein. In another embodiment, the composition has a melt index, 12, greater than, or equal to, 0.01 g/10 min, preferably greater than, or equal to 1 g/10 min, and more preferably greater than, or equal to, 5 g/10 min. In another embodiment the composition has a melt index, 12, less than, or equal to, 100 g/10 min, preferably less than, or equal to 50 g/10 min, and more preferably less than, or equal to, 20 g/10 min.

In another embodiment, the compositions have a percent crystallinity of less than, or equal to, 50%, preferably less than, or equal to, 30%, and more preferably less than, or equal to, 20%, as measured by DSC. Preferably, these polymers have a percent crystallinity from 2% to 50%, including all individual values and subranges from 2% to 50%. Such individual values and subranges are included herein and disclosed herein.

In another embodiment, the compositions have a density greater than, or equal to, 0.855 g/cm$^3$, preferably greater than, or equal to, 0.86 g/cm$^3$, and more greater than, or equal to, 0.87 g/cm$^3$; and a density less than, or equal to, 0.97 g/cm$^3$, preferably less than, or equal to, 0.96 g/cm$^3$, and more preferably less than, or equal to, 0.95 g/cm$^3$. In one embodiment, the density is from 0.855 g/cm$^3$ to 0.97 g/cm$^3$, and preferably from 0.86 g/cm$^3$ to 0.95 g/cm$^3$, and more preferably from 0.865 g/cm$^3$ to 0.93 g/cm$^3$. All individual values and subranges from 0.855 g/cm$^3$ to 0.97 g/cm$^3$ are included herein and disclosed herein.

In another embodiment, the compositions, in fabricated form, have a tensile strength from 5 to 40 MPa, preferably from 8 to 30 MPa, and even more preferably from 9 to 20 MPa. All individual values and subranges from 5 to 40 MPa are included herein and disclosed herein.

In another embodiment, the compositions, in fabricated form, have an elongation, in the machine direction or cross machine direction from 50 to 600 percent, or from 50 to 500 percent, and more preferably from 50 to 300 percent, and even more preferably from 50 to 200 percent. All individual values and subranges from 50 to 500 percent are included herein and disclosed herein.

In another embodiment, the compositions have a melt strength from 0.5 to 50 cN, and more preferably from 0.5 to 20 cN, and even more preferably from 0.5 to 10 cN. All individual values and subranges from 0.5 to 50 cN are included herein and disclosed herein.

In another embodiment, the compositions have a surface tension from 10 to 100 dynes/cm, and more preferably from 20 to 70 dynes/cm, and even more preferably from 30 to 50 dynes/cm (room temperature or 23C). All individual values and subranges from 10 to 100 dynes/cm are included herein and disclosed herein.

In another embodiment, the compositions have a surface tension greater than, or equal to, 30 dynes/cm, more preferably greater than, or equal to 35 dynes/cm, and even more preferably greater than, or equal to, 40 dynes/cm (at room temperature or 23°C) In another embodiment, the compositions have a surface tension greater than, or equal to 30 dynes/cm (at room temperature or 23°C).

In one embodiment, the ethylene/$\alpha$-olefin random copolymer is present as a continuous or co-continuous phase with the polydiene diol-based polyurethane.

In another embodiment, the ethylene/$\alpha$-olefin random copolymer is present as a discreet phase within the polydiene diol-based polyurethane.

In another embodiment, the compositions are present in a morphological form, in which the ethylene/α-olefin random copolymer is present as a discontinuous phase or dispersed domains within a continuous phase or matrix of the polydiene diol-based polyurethane. In another embodiment, the dispersed ethylene/α-olefin domains range in length from 0.2 microns to greater than 18 microns. In another embodiment, the dispersed ethylene/α-olefin domains range in length from 0.5 microns to greater than 18 microns. In another embodiment, the dispersed ethylene/α-olefin domains range in length from 0.2 microns to 40 microns. In another embodiment, the dispersed ethylene/α-olefin domains range in length from 0.5 microns to 20 microns. In yet another embodiment, the dispersed ethylene/α-olefin domains range in width from 0.01 microns to 20 microns, preferably from 0.1 microns to 10 microns, and more preferably from 0.5 microns to 7 microns. In regard to the width of the dispersed domains, all individual values and subranges from 0.01 microns to 20 microns are included herein and disclosed herein.

In another embodiment, the compositions are present in a morphological form, in which the ethylene/α-olefin random copolymer is present as a non-oriented discontinuous phase or dispersed domains within a continuous phase or matrix of the polydiene diol-based polyurethane. In another embodiment, the dispersed ethylene/α-olefin domains range in length from 0.2 microns to greater than 10 microns. In another embodiment, the dispersed ethylene/α-olefin domains range in length from 0.2 microns to 20 microns, and preferably from 0.5 microns to 10 microns. In another embodiment, the dispersed ethylene/α-olefin domains range in width from 0.01 microns to 20 microns, preferably from 0.05 microns to 10 microns, and more preferably from 0.1 microns to 7 microns. In regard to the width of the dispersed domains, all individual values and subranges from 0.01 microns to 20 microns are included herein and disclosed herein.

In another embodiment, the compositions are present in a morphological form, in which the polydiene diol-based polyurethane is present as an oriented discontinuous phase or dispersed domains within a continuous phase or matrix of ethylene/α-olefin random copolymer. In one embodiment, the dispersed polyurethane domains range in length from 0.2 microns to greater than 29 microns. In another embodiment, the dispersed polyurethane domains range in length from 0.5 microns to greater than 29 microns. In another embodiment, the dispersed polyurethane domains range in width from 0.005 microns to 5 microns, preferably from 0.01 microns to 2 microns, and more preferably from 0.05 microns to 1 microns. In regard to the width of the dispersed domains, all individual values and subranges from 0.005 microns to 5 microns are included herein and disclosed herein.

The compositions of the invention may be prepared by combining one or more ethylene/α-olefin interpolymers with one or more polydiene diol-based polyurethanes. Typically, the compositions of the invention are prepared by post-reactor blending the polymer components (the random ethylene/α-olefin interpolymer and the polydiene diol-based polyurethane). Illustrative of a post-reactor blending is an extrusion, in which two or more solid polymers are fed into an extruder, and physically mixed into a substantially homogeneous composition. The compositions of the invention may be crosslinked and/or foamed. In a preferred embodiment, the compositions of the invention are prepared by blending the random ethylene/α-olefin interpolymer and the polydiene diol-based polyurethane in a melt process. In a further embodiment, the melt process is a melt extrusion process.

In addition to the ethylene/α-olefin interpolymer and polydiene diol-based polyurethane, the compositions of the invention may further contain at least one additive, including, but not limited to, antioxidants, surface tension modifiers, blowing agents, foaming agents, antistatic agents, release agents, crosslinking agents and anti-block agents. An example of a hindered phenol antioxidant is Irganox® 1076 antioxidant, available from Ciba-Geigy Corp. The composition may also contain at least one elastomer containing a branching agent.

In another embodiment, the compositions further contain a polypropylene polymer component, such as a homopolymer of propylene, a copolymer of propylene with ethylene or at least one α-olefin, or a blend of a homopolymer and a copolymer, a nucleated homopolymer, a nucleated copolymer, or a nucleated blend of a homopolymer and a copolymer. The α-olefin in the propylene copolymer may be 1-butene, 1-pentene, 1-hexene, 1-heptene, 1-octene or 4-ethyl-1- pentene. Ethylene is the preferred comonomer. The copolymer may be a random copolymer or a block copolymer or a blend of a random copolymer and a block copolymer. The polymers may also be branched. As such, this component is preferably selected from the group consisting of polypropylene homopolymers and propylene/ethylene copolymers, or mixtures thereof. This component may a melt flow rate (MFR) (230°C and 2.16 kg weight) from 0.1 g/10 min to 150 g/10 min, preferably from 0.3 g/10 min to 60 g/10 min, more preferably from 0.8 g/10 min to 40 g/10 min, and most preferably from 0.8 g/10 min to 25 g/10 min. All individual values and subranges from 0.1 to 150 g/10 min are included herein and disclosed herein. This component may also have a density from 0.84 g/cc to 0.92 g/cc, more preferably from 0.85 g/cc to 0.91 g/cc, and most preferably from 0.86 g/cc to 0.90 g/cc. All individual values and subranges from 0.84 g/cc to 0.92 g/cc are included herein and disclosed herein. This component may have has a melting point greater than 125°C.

As used herein, "nucleated" refers to a polymer that has been modified by addition of a nucleating agent such as Millad®, a dibenzyl sorbitol commercially available from Milliken. Other conventional nucleating agents may also be used.

The following polypropylene polymers may be used in the compositions of the invention. PROFAX SR-256M, a clarified polypropylene copolymer resin with a density of 0.90 g/cc and a MFR of 2 g/10 min, available from Basell

(Elkton, MD). PROFAX 8623, an impact polypropylene copolymer resin with a density of 0.90 g/cc and a MFR of 1.5 g/10 min, also available from Basell (Elkton, MD). VERSIFY Plastomers and Elastomers available from The Dow Chemical Company, and available as propylene/ethylene copolymers with densities ranging from 0.86 g/cc to 0.89 g/cc, and MFRs ranging from 2 g/10 min to 25 g/10 min.

In a preferred embodiment, the composition of the invention is coextruded with another polyolefin to from a film comprising at least two layers or plies. In another embodiment, the composition of the invention is coextruded with one or more polyolefins to from a film comprising at least three layers or plies. Suitable polyolefins for coextrusion include high melt strength (≥ 5 cN) ethylene/α-olefin interpolymers, and rheology-modified, substantially gel-free thermoplastic elastomer compositions, as described in U.S. Patent 6,506,842. Articles comprising components formed from such films are also included within the scope of the invention.

It is also within the scope of the invention to combine the composition comprising an ethylene/α-olefin random interpolymer and polydiene diol-based polyurethane with one or more other types of thermoplastic polyurethanes, such as polyether/polyol-based urethanes and/or polyester/polyol-based urethanes. In such compositions, each polyurethane may or may not contain one or more unsaturated groups. Also, such compositions may also contain one or more additional polyolefins and/or one or more polyolefin elastomers.

Suitable polyether polyols include, but are not limited to, those obtained by the alkoxylation of suitable starting molecules with an alkylene oxide, such as ethylene oxide, propylene oxide, butylene oxide or mixtures thereof.

Suitable polyester/polyols include, but are not limited to, poly(alkylene alkanedioate) glycols, prepared via a conventional esterification process using a molar excess of an aliphatic glycol, relative to an alkanedioic acid. Suitable isocyanates, and, if needed, chain extenders, and chain stoppers, are described herein (see pages 23-25).

The compositions of the invention may contain a combination of two or more embodiments as described herein.

**<u>Ethylene/α-Olefin Random Interpolymer Component</u>**

The compositions of the invention comprise at least one ethylene/α-olefin (EAO) random interpolymer. The term "interpolymer" as used herein, refers to a polymer having polymerized therein at least two monomers. Such term includes, for example, copolymers, terpolymers and tetrapolymers. An ethylene/α-olefin interpolymer is a polymer prepared by polymerizing ethylene with at least one comonomer, typically an alpha olefin (α-olefin) of 3 to 20 carbon atoms (C3-C20), or a diene, such as 1,4-butadiene or 1,4-hexadiene. All individual values and subranges from 3 to 20 carbon atoms are included herein and disclosed herein.

Illustrative α-olefins include propylene, 1-butene, 1-pentene, 1-hexene, 4-methyl-1-pentene, 1-heptene, 1-octene, 1-nonene, 1-decene, and styrene. The α-olefin is desirably a C3-C10 α-olefin. Preferably the α-olefin is propylene, 1-butene, 1-hexene or 1-octene. Illustrative interpolymers include ethylene/propylene (EP) copolymers, ethylene/butene (EB) copolymers, ethylene/hexene (EH) copolymers ethylene/octene (EO) copolymers, ethylene/alpha-olefin/diene modified (EAODM) interpolymers, such as ethylene/propylene/diene modified (EPDM) interpolymers and ethylene/propylene/octene terpolymers. Preferred copolymers include EP, EB, EH and EO polymers.

In another embodiment, the ethylene/α-olefin interpolymers have comonomer(s) incorporation in the final polymer greater than 5 weight percent, preferably greater than 10 weight percent, based on the total weight of polymerizable monomers. The amount of comonomer(s) incorporation can be greater than 15 weight percent, and can even be greater than 20 or 25 weight percent, based on the total weight of polymerizable monomers.

The EAO interpolymers of this invention are long chain branched interpolymers, as compared to current commercially available linear (short chain branches or no branches) EAO interpolymers. In general, "long-chain branching" or "LCB" means a chain length that exceeds that of a short chain that results from incorporation of an alphaolefin into the backbone of an EAO polymer. In another embodiment, the EAO interpolymers are prepared from at least one catalyst that can form long chain branches within the interpolymer backbone.

The ability to incorporate long chain branching (LCB) into the polymer backbones has been discussed in several patents. For example, in U.S. Patent 3,821,143, a 1,4-hexadiene is used as a branching monomer to prepare ethylene/propylene/diene (EPDM) polymers having LCB. Such branching agents are sometimes referred to as "H branching agents." U.S. Patents 6,300,451 and 6,372,847 also use various H type branching agents to prepare polymers having LCB. It was discovered that constrained geometry catalysts (CGC) have the ability to incorporate long chain branches, such as, for example, vinyl terminated macromonomers, into the polymer backbone to form LCB polymers (see U.S. 5,278,272 (hereinafter the ’272 patent) and U.S. 5,272,236). Such branching is referred to as "T type branching."

The ’272 patent teaches that such CGC are unique in their ability to incorporate long chain branches into a polymer backbone. The amount of LCB that can be incorporated by these CGC is from "0.01 LCB/1000 carbon atoms" to "3 LCB/1000 carbon atoms." The number of carbon atoms includes backbone carbons and branched carbons. There are various other methods that can be used to define the degree of LCB in a molecule. One such method is taught in US 6,372,847. This method uses Mooney stress relaxation data to calculate a MLRA/ML ratio. MLRA is the Mooney Relaxation Area and ML is the Mooney viscosity of the polymer. Another method is PRR, which uses interpolymer

viscosities to calculate the levels of LCB in a polymer.

Interpolymer viscosity is conveniently measured in poise (dyne-second/square centimeter (d-sec/$cm^2$)) at shear rates within a range of 0.1-100 radian per second (rad/sec) and at 190°C under a nitrogen atmosphere, using a dynamic mechanical spectrometer (such as a RMS-800 or ARES from Rheometrics), under a dynamic sweep made from 0.1 to 100 rad/sec. The viscosities at 0.1 rad/sec and 100 rad/sec may be represented, respectively, as $V_{0.1}$ and $V_{100}$, with a ratio of the two referred to as RR and expressed as $V_{0.1}/V_{100}$.

The PRR value is calculated by the formula:

$$PRR = RR + [3.82 - \text{interpolymer Mooney Viscosity } (ML_{1+4} \text{ at } 125°C)] \times 0.3.$$

PRR determination is described in U.S. Patent 6,680,361.

The EAO interpolymer has a PRR from 8 to 70, preferably from 12 to 60, more preferably from 15 to 55, and most preferably from 18 to 50. Current commercial EAO resins, having normal levels of LCB, typically have PRR values less than 3. All individual PRR values and subranges from -1 to 70 are included herein and disclosed herein. A PRR value of 70 is equivalent to an MLRA/MV value of 7.6.

T-type branching is typically obtained by copolymerization of ethylene, or other alpha olefins, with chain end unsaturated macromonomers, in the presence of a metallocene catalyst, under the appropriate reactor conditions, such as those described in WO 00/26268 (and U.S. 6,680,361),. If extremely high levels of LCB are desired, H-type branching is the preferred method, since T-type branching has a practical upper limit to the degree of LCB. As discussed in WO 00/26268, as the level of T-type branching increases, the efficiency or throughput of the manufacturing process decreases significantly, until the point is reached where production becomes economically unviable. T-type LCB polymers can be produced by metallocene catalysts, without measurable gels, but with very high levels ofT-type LCB. Because the macromonomer being incorporated into the growing polymer chain has only one reactive unsaturation site, the resulting polymer only contains side chains of varying lengths, and at different intervals along the polymer backbone.

H-type branching is typically obtained by copolymerization of ethylene, or other alpha olefins, with a diene having two double bonds, reactive with a nonmetallocene type of catalyst in the polymerization process. As the name implies, the diene attaches one polymer molecule to another polymer molecule through the diene bridge, the resulting polymer molecule resembling an "H," which might be described as more of a crosslink, than a long chain branch. H-type branching is typically used when extremely high levels of branching are desired. If too much diene is used, the polymer molecule can form too much branching or crosslinking, causing the polymer molecule to become insoluble in the reaction solvent (in a solution process), and thus, causing the polymer molecule to fall out of solution, resulting in the formation of gel particles in the polymer.

Additionally, use of H-type branching agents may deactivate metallocene catalysts and reduce catalyst efficiency. Thus, when H-type branching agents are used, the catalysts used, are typically not metallocene catalysts. The catalysts used to prepare the H-type branched polymers in US 6,372,847 are vanadium type catalysts.

T-type LCB polymers are disclosed in U.S. Patent 5,272,236, in which the degree of LCB is from 0.01 LCB/1000 carbon atoms to 3 LCB/1000 carbon atoms, and in which the catalyst is a constrained geometry catalyst (metallocene catalyst). According to P. Doerpinghaus and D. Baird, in The Journal of Rheology, 47(3), pp 717-736 May/June 2003, "Separating the Effects of Sparse Long-Chain Branching on Rheology from Those Due to Molecular Weight in Polyethylenes," free radical processes, such as those used to prepare low density polyethylene (LDPE), produce polymers having extremely high levels of LCB. For example, the resin NA952 in Table I of Doerpinghaus and Baird is a LDPE prepared by a free radical process, and, according to Table II, contains 3.9 LCB/1000 carbon atoms. Ethylene alpha olefins (ethylene-octene copolymers), available from The Dow Chemical Company (Midland, Michigan, USA), that are considered to have average levels of LCB, include resins Affinity PL1880 and Affinity PL1840 of Tables I and II, respectively, and contain 0.018 and 0.057 LCB/1000 carbon atoms.

In one embodiment of the invention, the EAO component has T-type LCB levels greatly exceeding that of current, commercially available EAOs, but has LCB levels below that obtainable by using H-type and free radical branching agents. Table 1 lists the LCB levels of various types of ethylene/$\alpha$-olefin interpolymers useful in the invention.

Preferably, the EAO interpolymers of the invention have a molecular weight distribution (MWD) of 1.5 to 4.5, more preferably 1.8 to 3.8 and most preferably 2.0 to 3.4. All individual values and subranges from 1.5 to 5 are included herein and disclosed herein. The EOA interpolymers have a density less than, or equal to, 0.93 g/cc, preferably less than, or equal to, 0.92 g/cc, and more preferably less than, or equal to, 0.91 g/cc. In another embodiment, the EOA interpolymers have a density greater than, or equal to, 0.86 g/cc, preferably greater than, or equal to, 0.87 g/cc, and more preferably greater than, or equal to, 0.88 g/cc. In another embodiment, the EAO interpolymers have a density from 0.86 g/cc to 0.93 g/cc, and all individual values and subranges from 0.86 g/cc to 0.93 g/cc are included herein and disclosed herein.

In one embodiment, the EAO interpolymers have a melt index, 12, greater than, or equal to, 0.1 g/10 min, preferably greater than, or equal to, 0.5 g/10 min, and more preferably greater than, or equal to 1.0 g/10 min. In another embodiment, the EAO interpolymers have a melt index, 12, less than, or equal to, 30 g/10 min, preferably less than, or equal to, 25 g/10 min, and more preferably less than, or equal to 20 g/10 min.

In another embodiment, the EAO interpolymers have a melt index, 12, from 0.1 g/10 min to 30 g/10 min, preferably from 0.1 g/10 min to 20 g/10 min, and more preferably from 0.1 g/10 min to 15 g/10 min. all individual values and subranges from 0.1 g/10 min to 30 g/10 min are included herein and disclosed herein.

EAO interpolymers suitable for the invention can be made by the process described in WO 00/26268. EAO-1, EAO-2-1, EAO-8 and EAO-9 were prepared by the procedure described in WO 00/26268, using a mixed catalyst system described in US Patent 6,369,176. EAO-7-1 was prepared in dual reactors by the procedure described in WO 00/26268. EAO-E-A was prepared as described in U.S. Patents 5,272,236 and 5,278,272. U.S. Patents 5,272,236; 5,278,272; and 6,369,176.

Table 1: Ethylene/α-Olefin Random Interpolymers

| EAO | Mooney Viscosity | MLRA/MV | PRR | Comonomer(s) | Wt% Ethylene | Density g/cc |
|---|---|---|---|---|---|---|
| T-Branches (Low Levels) | | | | | | |
| EAO-A | 26.2 | 0.3 | -2.9 | butene | | |
| EAO-B | 48.6 | 1.2 | -5.5 | butene | | |
| T-Branches (Low to Normal Commercial Levels) | | | | | | |
| EAO-C | 21.5 | 0.8 | 0.6 | octene | | |
| EAO-D | 34.4 | 1.2 | -0.8 | octene | | |
| EAO-E | 34.1 | 1.2 | -0.5 | octene | | |
| EAO-E-A | 32 | | 0 | octene | 58 | 0.86 |
| EAO-F | 18.3 | 0.6 | -0.5 | butene | | |
| | | | | | | |
| T-Branches (High Levels) | | | | | | |
| EAO-1 | 40.1 | 3.8 | 29 | butene | 87 | 0.90 |
| EAO-2 | 27 | 2.8 | 22 | butene | | |
| EAO-2-1 | 26 | | 19 | butene | 87 | 0.90 |
| EAO-3 | 36.8 | 2.4 | 15 | butene | | |
| EAO-4 | 17.8 | 2.3 | 12 | butene | | |
| EAO-5 | 15.7 | 2.0 | 10 | butene | | |
| EAO-6 | 37.1 | 7.6 | 70 | propylene | | |
| EAO-7 | 17.4 | 3.4 | 26 | 69.5wt% ethylene /30wt% propylene /0.5% ENB | 69.5 | |
| EAO-7-1 | 20 | | 21 | propylene/diene | 69.5 | 0.87 |
| EAO-8 | 26 | | 45 | propylene | 70 | 0.87 |
| EAO-9 | 30 | | 17 | octene | 70 | 0.88 |
| | | | | | | |

(continued)

| EAO | Mooney Viscosity | MLRA/MV | PRR | Comonomer(s) | Wt% Ethylene | Density g/cc |
|---|---|---|---|---|---|---|
| H-Branches | | | | | | |
| EAO-G | 24.5 | 10.9 | | 76.8wt% ethylene /22.3wt% propylene / 0.9% ENB | | |
| EAO-H | 27 | 7.1 | 72 | 72wt% ethylene /22wt% propylene /6% hexadiene | | |
| EAO- I | 50.4 | 7.1 | | 71wt% ethylene /23wt% propylene /6% hexadiene | | |
| EAO-J | 62.6 | 8.1 | 55 | 71wt% ethylene /23wt% propylene /6% hexadiene | | |
| Mooney Viscosity: $ML_{1+4}$ at 125°C | | | | | | |

Examples of suitable commercial EAOs include Engage®, ENR, ENX, Nordel® and Nordel® IP products, available from The Dow Chemical Company, and Vistalon, available from ExxonMobil Chemical Company.

In another embodiment of the invention, the EAO interpolymers have a 0.1 rad/sec, shear viscosity (also referred to herein as low shear viscosity) greater than 100,000 poise, preferably greater than 200,000 poise, more preferably greater than 300,000 poise, and most preferably greater than 400,000 poise. This viscosity is obtained by measuring the polymer viscosity at a shear rate of 0.1 radian per second (rad/sec) at 190°C, under a nitrogen atmosphere, using a dynamic mechanical spectrometer, such as an RMS-800 or ARES from Rheometrics.

Low shear viscosity is affected by a polymer's molecular weight (MW) and the degree of LCB. The molecular weight is indirectly measured by a melt strength of the polymer. As a general rule, the greater the molecular weight of a polymer, the better the melt strength. However, when molecular weight becomes too great, the polymers become impossible to process. Incorporation of LCB into a polymer backbone improves the processability of high MW polymers. Thus, low shear viscosity (0.1 rad/sec) is somewhat of a measure of the balance of MW and LCB in a polymer.

In another embodiment of the invention, the ethylene/$\alpha$-olefin random interpolymers have a melt strength of 5 cN or greater, preferably 6 cN or greater, and more preferably 7 cN or greater. Melt strength (MS), as used herein, is a maximum tensile force, in centiNewtons (cN), measured on a molten filament of a polymer melt, extruded from a capillary rheometer die at a constant shear rate of 33 reciprocal seconds ($sec^{-1}$), while the filament is being stretched by a pair of nip rollers that are accelerating the filament at a rate of 0.24 centimeters per second (cm/sec), from an initial speed of 1 cm/sec. The molten filament is preferably generated by heating 10 grams (g) of a polymer that is packed into a barrel of an Instron capillary rheometer, equilibrating the polymer at 190°C for five minutes (min), and then extruding the polymer at a piston speed of 2.54 cm/min, through a capillary die with a diameter of 0.21 cm and a length of 4.19 cm. The tensile force is preferably measured with a Goettfert Rheotens that is located so that the nip rollers are 10 cm directly below a point at which the filament exits the capillary die.

In one embodiment, the ethylene/$\alpha$-olefin polymer (or interpolymer) are substantially linear, homogeneously-branched, in which the $\alpha$-olefin comonomer is randomly distributed within a given polymer molecule, and substantially all of the polymer molecules have the same ethylene-to-comonomer ratio. The substantially linear ethylene interpolymers used in the present invention are described in U.S. Patent Nos. 5,272,236; 5,278,272; 6,054,544; 6,335,410 and 6,723,810. The substantially linear ethylene interpolymers are homogeneously branched ethylene polymers having long chain branching. The long chain branches have the same comonomer distribution as the polymer backbone, and can have about the same length as the length of the polymer backbone.

"Substantially linear," typically, is in reference to a polymer that is substituted, on average, with 0.01 long chain branches per 1000 total carbons (including both backbone and branch carbons) to 3 long chain branches per 1000 total

carbons, as discussed above for the '272 patent. Some polymers may be substituted with 0.01 long chain branches per 1000 total carbons to 1 long chain branch per 1000 total carbons. Commercial examples of substantially linear polymers include the ENGAGE™ polymers (available from DuPont Dow Elastomers L.L.C.), and AFFINITY™ polymers (available from The Dow Chemical Company).

The substantially linear ethylene interpolymers form a unique class of homogeneously branched ethylene polymers. They differ substantially from the well-known class of conventional, homogeneously branched linear ethylene interpolymers, described by Elston in U.S. Patent 3,645,992, and, moreover, they are not in the same class as conventional heterogeneous Ziegler-Natta catalyst polymerized linear ethylene polymers (for example, ultra low density polyethylene (ULDPE), linear low density polyethylene (LLDPE) or high density polyethylene (HDPE) made, for example, using the technique disclosed by Anderson et al. in U.S. Patent 4,076,698); nor are they in the same class as high pressure, free-radical initiated, highly branched polyethylenes, such as, for example, low density polyethylene (LDPE), ethylene-acrylic acid (EAA) copolymers and ethylene vinyl acetate (EVA) copolymers.

The homogeneously branched, substantially linear ethylene interpolymers useful in the invention have excellent processability, even though they have a relatively narrow molecular weight distribution. Surprisingly, the melt flow ratio (I10/I2), according to ASTM D 1238, of the substantially linear ethylene interpolymers can be varied widely, and essentially independently of the molecular weight distribution (Mw/Mn or MWD). This surprising behavior is completely contrary to conventional homogeneously branched linear ethylene interpolymers, such as those described, for example, by Elston in U.S. 3,645,992, and heterogeneously branched conventional Ziegler-Natta polymerized linear polyethylene interpolymers, such as those described, for example, by Anderson et al., in U.S. 4,076,698. Unlike substantially linear ethylene interpolymers, linear ethylene interpolymers (whether homogeneously or heterogeneously branched) have rheological properties, such that, as the molecular weight distribution increases, the I10/I2 value also increases.

The random ethylene/$\alpha$-olefin component of the compositions of the invention may contain a combination of two or more embodiments as described herein.

## Polyurethane Component

The polyurethanes of the present invention are each independently prepared from a polydiene diol, which is characterized as having an unsaturated hydrocarbon backbone and at least one (preferably about 2) isocyanate-reactive group(s) attached at the ends of the molecule or attached pendantly within the molecule. This functionality may be any of the groups that react with isocyanates to form covalent bonds. This functionality preferably contains "active hydrogen atoms" with typical examples being hydroxyl, primary amino, secondary amino, sulfhydryl, and mixtures thereof. The term "active hydrogen atoms" refers to hydrogen atoms that, because of their placement in a molecule, display activity according to the Zerewitinoff test as described by Kohler in J. Am. Chemical Soc., 49, 31-81 (1927). The content of the unsaturated segment in the polyurethane is from 1 to 95 weight percent, and preferably from 10 to 50 weight percent. In a preferred embodiment, the polyurethane component is prepared from a polydiene diol. The polyurethane is further blended with a random ethylene/$\alpha$-olefin as described herein.

One method for preparing such functional polydienes is a two-step process in which a conjugated diene is grown by anionic polymerization from both ends of a difunctional initiator. The molecular weight of the polydiene is controlled by the molar ratio of the conjugated diene to the initiator. In the second step, the ends are then capped with alkylene oxide (such as ethylene or propylene oxide) to produce an unsaturated diol. This particular process is described in Kamienski (US 4,039,593). In such processes, it is possible to add excess alkylene oxide and form short poly(alkylene oxide) chains at the ends of the polydiene.

The conjugated dienes used to prepare the functional polydiene typically contains from 4 to 24 carbons, and preferably from 4 to 8 carbons. Typical dienes include butadiene and isoprene, and typical functional polydienes are polybutadiene and polyisoprene capped at each end with ethylene oxide. These polydienes have at least one functional group per molecule, and typically have a number average molecular weight from 500 to 10,000 g/mole.

The polyurethane of the present invention is prepared by reacting the functional polydiene with an isocyanate and optionally a chain extender. In the 'prepolymer' method, typically one or more functional polydienes are reacted with one or more isocyanates to form a prepolymer. The prepolymer is further reacted with one or more chain extenders. Alternatively, the polyurethanes may be prepared by a one-shot reaction of all of the reactants. Typical polyurethanes have a number average molecular weight from 5,000 to 1,000,000 g/mole, and more preferably from 20,000 to 100,000 g/mole.

Diisocyanates suitable for use in preparing the hard segment of the polyurethanes according to this invention include aromatic, aliphatic, and cycloaliphatic diisocyanates and combinations thereof. An example of a structural unit derived from diisocyanate (OCN-R-NCO) is represented by the following formula (I):

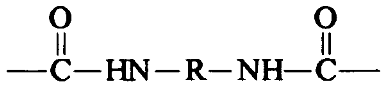

(I),

where R is an alkylene, cycloalkylene, or arylene group. Representative examples of these diisocyanates can be found in U.S. Patents 4,385,133; 4,522,975; and 5,167,899. Preferred diisocyanates include, but are not limited to, 4,4'-diisocyanatodiphenylmethane, p-phenylene diisocyanate, 1,3-bis(isocyanatomethyl)-cyclohexane, 1,4-diisocyanato-cyclohexane, hexamethylene diisocyanate, 1,5-naphthalene diisocyanate, 3,3'-dimethyl-4,4'-biphenyl diisocyanate, 4,4'-diisocyanato-dicyclohexylmethane, and 2,4-toluene diisocyanate. More preferred are 4,4'-diisocyanato-dicyclohexylmethane and 4,4'-diisocyanato-diphenylmethane. Most preferred is 4,4'-diisocyanatodiphenylmethane.

Some examples of polydiene diols, and corresponding polyurethanes, are described in Pytela et al, Novel Polybutadiene Diols for Thermoplastic Polyurethanes, International Polyurethane Conference, PULat. Am. 2001*; and in* Pytela et al, Novel Thermoplastic Polyurethanes for Adhesives and Sealants, Adhesives & Sealant Industry, June 2003, pp. 45-51. Some examples of some hydrogenated polydiene diols, and corresponding polyurethanes, are described in International Publication No. WO 99/02603, and corresponding European Patent EP 0 994 919 B1. As discussed in the last two references, the hydrogenation may be carried out by a variety of established processes, including hydrogenation in the presence of catalysts as Raney Nickel, noble metals, such as platinum, soluble transition metal catalysts and titanium catalysts, as in U.S. Patent 5,039,755. Also, the polymers may have different diene blocks and these diene blocks may be selectively hydrogenated as described in U. S. Patent 5,229,464.

Diisocyanates also include aliphatic and cycloaliphatic isocyanate compounds, such as 1,6-hexamethylene-diisocyanate; ethylene diisocyanate; 1-isocyanato-3,5,5-trimethyl-1-3-isocyanatomethylcyclohexane; 2,4- and 2,6-hexahydrotoluenediisocyanate, as well as the corresponding isomeric mixtures; 4,4'-, 2,2'- and 2,4'-dicyclohexyl-methanediisocyanate, as well as the corresponding isomeric mixtures. Also, 1,3-tetramethylene xylene diisocyanate can be used with the present invention. The isocyanate may be selected from organic isocyanates, modified isocyanates, isocyanate-based prepolymers, and mixtures thereof.

As discussed above, the polyurethanes can be prepared by mixing all ingredients, at essentially the same time in a "one-shot" process, or can be prepared by step-wise addition of the ingredients in a "prepolymer process," with the processes being carried out in the presence of, or without the addition of, optional additives. The polyurethane forming reaction can take place in bulk, or in solution, with, or without, the addition of a suitable catalyst that would promote the reaction of isocyanates with hydroxyl or other functionality. Examples of a typical preparation of these polyurethanes has been described by Masse (see U.S. Patent 5,864,001).

The other main component of the hard segment of the polyurethanes of the present invention is at least one chain extender, which are well know in this technology field. As is known, when the chain extender is a diol, the resulting product is a TPU. When the chain extender is a diamine or an amino alcohol, the resulting product is technically a TPUU.

The chain extenders that may be used in the invention are characterized by two or more, preferably two, functional groups, each of which contains "active hydrogen atoms." These functional groups are preferably in the form of hydroxyl, primary amino, secondary amino, and mixtures thereof. The term "active hydrogen atoms" refers to hydrogen atoms that, because of their placement in a molecule, display activity according to the Zerewitinoff test as described by Kohler in J. Am. Chemical Soc., 49, 31-81 (1927).

The chain extenders may be aliphatic, cycloaliphatic, or aromatic and are exemplified by diols, diamines, and aminoalcohols. Illustrative of the difunctional chain extenders are ethylene glycol, diethylene glycol, propylene glycol, dipropylene glycol, 1,3-propanediol, 1,3-butanediol, 1,4-butanediol, 1,5-pentanediol and other pentane diols, 2-ethyl-1,3-hexanediol, 2-ethyl-1,6-hexanediol, and other 2-ethyl-hexanediols, 1,6-hexanediol and other hexanediols, 2,2,4-trimethylpentane-1,3-diol, decanediols, dodecanediols, bisphenol A, hydrogenated bisphenol A, 1,4-cyclohexanediol, 1,3-cyclohexane dimethanol, 1,4-cyclohexane dimethanol, 1,4-bis(2-hydroxyethoxy)-cyclohexane, 1,4-bis(2-hydroxyethoxy)benzene, Esterdiol 204, N-methylethanolamine, N-methyliso-propylamine, 4-aminocyclohexanol, 1,2-diaminoethane, 1,3-diaminopropane, diethylenetriamine, toluene-2,4-diamine, and toluene-1,6-diamine. Aliphatic compounds containing from 2 to 8 carbon atoms are preferred. If thermoplastic or soluble polyurethanes are to be made, the chain extenders will be difunctional in nature. Amine chain extenders include, but are not limited to, ethylenediamine, monomethanolamine, and propylenediamine.

Commonly used linear chain extender are generally diol, diamine or amino alcohol compounds characterized by having a molecular weight of not more than 400 Daltons (or g/mole). In this context, by "linear" it is meant that no branching from tertiary carbon is included. Examples of suitable chain extenders are represented by the following formulae: $HO-(CH_2)_n-OH$, $H_2N-(CH_2)_n-NH_2$, and $H_2N-(CH_2)_n-OH$, where "n' is typically a number from 1 to 50.

A first, common chain extender is 1,4-butane diol ("butane diol" or "BDO"), and is represented by the following formula: $HO-CH_2CH_2CH_2CH_2-OH$.

Other suitable chain extenders include ethylene glycol; diethylene glycol; 1,3-propanediol; 1,6-hexanediol; 1,5-heptane diol; triethyleneglycol; or combinations thereof.

Also suitable, are cyclic chain extenders which are generally diol, diamine or amino alcohol compounds characterized by having a molecular weight of not more than 400 Daltons (or g/mole). In this context, by "cyclic" it is meant a ring structure, and typical ring structures include, but are not limited to, the 5 to 8 member ring structures with hydroxyl-alkyl branches. Examples of cyclic chain extender are represented by the following formulae: HO-R-(ring)-R'-OH and HO-R-O-(ring)-O-R'-OH, where R and R' are one to five carbon alkyl chains, and each ring has 5 to 8 members, preferably all carbons. In these examples, one or both of the terminal -OH's can be replaced with $-NH_2$. Suitable cyclic chain extenders include cyclohexane dimethanol ("CHDM"), hydroquinone bis-2-hydroxyethyl ether (HQEE).

A structural unit of cyclohexanedimethanol (CHDM), a preferred cyclic chain extender, is represented by the following formula: $HO-CH_2$-(cyclohexane ring)-$CH_2-OH$.

The chain extender(s) is (are) incorporated into the polyurethane in amounts determined by the selection of the specific reactant components, the desired amounts of the hard and soft segments and the index sufficient to provide good mechanical properties, such as modulus and tear strength.

The polyurethane compositions of this invention may contain from 2 to 25 weight percent, preferably from 3 to 20 weight percent, more preferably 4 to 18 weight percent of the chain extender component.

If desired, optionally, small amounts of monohydroxylfunctional or monoaminofunctional compounds, often termed "chain stoppers," may be used to control molecular weight. Illustrative of such chain stoppers are the propanols, butanols, pentanols, and hexanols. When used, chain stoppers are typically present in minor amounts from 0.1 percent by weight to 2 percent by weight of the entire reaction mixture leading to the polyurethane composition.

As is well known to those skilled in the art, the ratio of isocyanate to total functional group determines the number average molecular weight (Mn) of the polymer. In some cases it is desirable to use a very slight excess of isocyanate.

For linear, high molecular weight (Mn) polymers, starting materials with 2 functional groups per chain are desirable. However, it is possible to accommodate starting materials with a range of functionality. For example, a polydiene with one functional end could be used to cap both ends of a polyurethane, with the middle portion consisting of repeating isocyanate-chain extender moieties. Polydienes with more than two functional groups will form branched polymers. Although crosslinking and gels can be a problem, if the degree of functionality is too high, this can usually be controlled by process conditions. Such branched polymers will exhibit some rheological characteristics that are desirable in some cases, such as high melt strength.

Optionally, catalysts that will promote or facilitate the formation of urethane groups may be used in the formulation. Illustrative of useful catalysts are stannous octanoate, dibutyltin dilaurate, stannous oleate, tetrabutyltin titanate, tributyltin chloride, cobalt naphthenate, dibutyltin oxide, potassium oxide, stannic chloride, N,N,N,N'-tetramethyl-1,3-butanediamine, bis[2-(N,N-dimethylamino)ethyl] ether, 1,4-diazabicyclo-[2.2.2]octane; zirconium chelates, aluminum chelates and bismuth carbonates. The catalysts, when used, are typically employed in catalytic amounts that may range from 0.001 weight percent, and lower, to 2 weight percent, and higher, based on the total amount of polyurethane-forming ingredients.

Additionally, additives may be used to modify the properties of the polyurethane of this invention. Additives may be included in the conventional amounts as already known in the art and literature. Usually additives are used to provide specific desired properties to the polyurethanes such as various antioxidants, ultraviolet inhibitors, waxes, thickening agents and fillers. When fillers are used, they may be either organic or inorganic, but are generally inorganic such as clay, talc, calcium carbonate, silicas. Also, fibrous additives such as glass or carbon fiber may be added to impart certain properties.

In a preferred embodiment of the invention, the polyurethane is formed from a polydiene diol, an isocyanate and a chain extender, and preferably an aliphatic chain extender. In another embodiment, the polydiene diol-based polyurethane is hydrogenated.

In a further embodiment, the polydiene diol is formed from conjugated dienes having 4 to 24 carbons, and preferably having 4 to 8 carbons. As discussed above, typical dienes include butadiene and isoprene, and typical polydienes include polybutadiene and polyisoprene, and hydrogenated polybutadiene and hydrogenated polyisoprene. In a preferred embodiment, these polydienes have at least one, and more preferably at least two, hydroxyl groups in the molecule, and typically have a number-average molecular weight from 500 to 10,000 g/mole, and more preferably from 1,000 to 5,000 g/mole, and even more preferably from 1,500 to 3,000 g/mole. Preferably, the polydiene diol is a polybutadiene diol or a polyisoprene diol, and more preferably a polybutadiene diol.

In another embodiment, the polydiene diol-based polyurethane is formed from a composition comprising 15 to 40 weight percent of diisocyanate, 50 to 75 weight percent of a polydiene diol, and 5 to 15 weight percent of a chain extender. In a further embodiment, the polydiene diol is a polybutadiene diol or a polyisoprene diol, and preferably is a polybutadiene diol. In a further embodiment, the diisocyanate is an aromatic diisocyanate, and more preferably 4,4'-diphenylmethane diisocyanate. In yet a further embodiment, the chain extender is an aliphatic diol. In another embodiment, the polydiene diol has a number-average molecular weight from 500 to 10,000 g/mole, and more preferably from

1,000 to 5,000 g/mole, and even more preferably from 1,500 to 3,000 g/mole. In another embodiment, the polydiene diol is nonhydrogenated. In another embodiment, the polydiene diol is hydrogenated. In another embodiment, the polydiene diol is partially hydrogenated.

The polyurethane component of the compositions of the invention may contain a combination of two or more embodiments as described herein.

## Applications

The compositions of this invention can be fabricated into parts, sheets or other article of manufacture using any extrusion, thermoforming, calendering, blow molding, foaming or injection molding process. The components of the composition can be fed to the process either pre-mixed, or, in a preferred embodiment, the components can be fed directly into the process equipment, such as a converting extruder, such that the composition is formed in the extruding, thermoforming, calendering, blow molding, foaming or injection molding process. The compositions also may be blended with another polymer prior to fabrication of an article. Such blending may occur by any of a variety of conventional techniques, one of which is dry blending of pellets of the thermoplastic polyolefin composition with pellets of another polymer.

A partial, far from exhaustive, listing of articles that can be fabricated from the compositions of the invention, includes instrument panels, instrument panel skins, instrument panel foam, bumper fascia, body side moldings, interior pillars, exterior trim, interior trim, weather stripping, air dams, air ducts, and wheel covers.

For sheet extrusion application, the compositions of the invention may have a melt index, $I_2$, less than, or equal to, 2 g/10 min (190°C/2.16 kg), a density less than 1.0 g/cc, and contain from 25 to 75 weight percent, based on the total weight of the composition, of the ethylene/$\alpha$-olefin interpolymer. Also, it is preferred that the polydiene diol-based polyurethane have a NCO/OH ratio from 0.90 to 1.10, preferably from 0.95 to 1.05, and more preferably from 0.98 to 1.03.

For injection molding applications, the compositions of the invention may have a melt index, $I_2$, from 2 to 30 g/10 min (190°C/2.16 kg), a density less than 0.91 g/cc, and contain from 25 to 75 weight percent, based on the total weight of the composition, of the ethylene/$\alpha$-olefin interpolymer. Also, it is preferred that the polydiene diol-based polyurethane have a NCO/OH ratio from 0.90 to 1.10, preferably from 0.95 to 1.05, and more preferably from 0.98 to 1.03.

For blow molding applications, the compositions of the invention may have a melt index, $I_2$, less than, or equal to, 2 g/10 min (190°C/2.16 kg), a density less than 1.0 g/cc, and contain from 25 to 75 weight percent, based on the total weight of the composition, of the ethylene/$\alpha$-olefin interpolymer. Also, it is preferred that the polydiene diol-based polyurethane have a NCO/OH ratio from 0.90 to 1.10, preferably from 0.95 to 1.05, and more preferably from 0.98 to 1.03.

For crosslinking foam applications, the compositions of the invention may have a melt index, $I_2$, from 1 to 5 g/10 min (190°C/2.16 kg), a density less than 0.89 g/cc, and contain from 25 to 75 weight percent, based on the total weight of the composition, of the ethylene/$\alpha$-olefin interpolymer. Also, it is preferred that the polydiene diol-based polyurethane have a NCO/OH ratio from 0.90 to 1.10, preferably from 0.95 to 1.05, and more preferably from 0.98 to 1.03.

Automotive articles may be prepared by a variety of processes. They may be injection molded, blow molded, compression molded, low pressure injection molded, extruded and then thermoformed by either male or female vacuum thermoforming, or prepared hybrid process such as low pressure molding wherein a blanket of still molten composition is placed against the back of a skin foam composite and pressed under low pressure to form the skin and bond it to the hard TPO substrate. Extruded sheets formed from the compositions of the invention can be thermoformed over commercial automotive forms, such as dashboard forms, instrument panels and door panels.

Thermoforming generally deals with the pressing or squeezing of a pliable plastic, in sheet form, over a template to form a final shape. The sheet is formed over the template using pressure and heat. Thermoformable sheets can be prepared from the resin pellets or powder of the compositions of the invention by casting, calendaring,_rolling, extruding, compression molding or other technique. In the thermoforming process, sheets formed from the compositions of the invention are typically heated, and then stretched over a mold (template). The stretched sheet is then cooled on the mold surface, and the resulting part is trimmed from the excess of the sheet not included in the mold. The compositions of the invention are particularly suited for the thermoforming applications, and provide automotive parts with good definition at suitable thermoforming temperatures and cycle times. Suitable thermoforming temperatures may range from 120°C to 220°C. One skilled in the art is able to establish appropriate thermoforming conditions based on the mold (template) of interest.

The compositions of the invention also have good moldability and can be used to form injection molded automotive parts with an good mechanical properties. Suitable injection molding temperature may be from 120°C to 220°C. One skilled in the art is able to establish appropriate injection molding conditions based on the mold (template) of interest. The automotive parts of the invention can be prepared using injection molding tooling, and it is within the scope of the invention to form injection molded parts using tools designed for conventional PC and ABS resins.

Additional automotive articles, that may be made by these processes include, but are not limited to, instrument panel retainers, toppers, valence panels (windshield close-out panel), instrument cluster bezels, center console bezels,

the interior and exterior of glove boxes, the columns and posts, A, B and C pillars, all the assorted storage areas and covers, and under the hood parts, such as fan housings.

## Definitions

Any numerical range recited herein, includes all values from the lower value and the upper value, in increments of one unit, provided that there is a separation of at least two units between any lower value and any higher value. As an example, if it is stated that a compositional, physical or other property, such as, for example, molecular weight, viscosity, melt index, is from 100 to 1,000, it is intended that all individual values, such as 100, 101, 102, and sub ranges, such as 100 to 144, 155 to 170, 197 to 200, are expressly enumerated in this specification. For ranges containing values which are less than one, or containing fractional numbers greater than one (e.g., 1.1, 1.5), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this application. Numerical ranges have been recited, as discussed herein, in reference to melt index, molecular weight distribution (Mw/Mn), percent crystallinity, percent comonomer, number of carbon atoms in the comonomer, and other properties.

The term "random ethylene/α-olefin interpolymer," as used herein, is defined as used in the art in reference to polymers, and refers to ethylene-based interpolymers in which the comonomer(s) is/are randomly distributed along the polymer chain. The terms "ethylene interpolymer" or "ethylene/α-olefin interpolymer," as used herein, refers to a polymer formed from predominantly (greater than 50 mole percent) ethylene monomeric units. Mole percentage is based on the total moles of polymerizable monomers.

The term "polydiene diol-based polyurethane," as used herein, refers to a polyurethane polymer formed, in part, from a polydiene diol.

The term, "hydrogenation," is known in the art, and as used herein is in reference to the hydrogenation (reaction of hydrogen with alkene groups) of double bonds within the polydiene diol, and is in reference to the final (hydrogenated) product. As used herein, the term "hydrogenation" refers to the complete hydrogenation of all the double bonds, or the near complete hydrogenation (approximately greater than 95 mole percent) of the double bonds, within the polydiene diol. The term "partial hydrogenation," as used herein, is in reference to a hydrogenation reaction, and the final product, both in which a significant amount (approximately greater than 5 mole percent) of the double bonds, within the polydiene diol, are not hydrogenated.

The term "composition," as used herein, includes a mixture of materials, which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer, usually employed to refer to polymers prepared from only one type of monomer, and the term interpolymer as defined hereinafter.

The term "interpolymer," as used herein, refers to polymers prepared by the polymerization of at least two different types of monomers. The generic term interpolymer thus includes copolymers, usually employed to refer to polymers prepared from two different types of monomers, and polymers prepared from more than two different types of monomers.

The terms "blend" or "polymer blend," as used herein, mean a blend of two or more polymers. Such a blend may or may not be miscible. Such a blend may or may not be phase separated. Such a blend may or may not contain one or more domain configurations, as determined from transmission electron spectroscopy, light scattering, x-ray scattering, and other methods known in the art.

## Test Methods

Density was determined in accordance with ASTM D792-00, Method B.

Gloss was determined in accordance with ASTM D 2457-03. A Multi-Angle 268 Reflectometer is used to measure the 60 degree gloss. Light is directed onto the grained surface of the extruded sheeting at 60 degrees, and the reflected light is measured photo electrically.

Melt index, $I_2$, in g/10 min, measured using ASTM D-1238-04 (version C), Condition 190°C/2.16 kg. The notation "$I_{10}$" refers to a melt index, in g/10 min, measured using ASTM D-1238-04, Condition 190°C/10.0 kg. The notation "$I_{21}$" refers to a melt index, in g/10 min, measured using ASTM D-1238-04, Condition 190°C/21.6 kg.

Differential Scanning Calorimeter (DSC) - A TA Instruments 2920 Modulated DSC Instrument was used in an un-modulated mode to define the relative percent crystallinity and to monitor the Tc, Tg and Tm characteristics of each polymer or compound. The heat-cool-heat method, using nitrogen purge, was run on a sample of 9-10 mg.

The thermal behavior of the sample was investigated with the following temperature profile. The sample was

rapidly heated to 180°C and held isothermal for 3 minutes in order to remove any previous thermal history. The sample was then cooled to - 40°C at 10 °C/min cooling rate, and was held at -40°C for 3 minutes. The sample was then heated to 150°C at 10°C/min heating rate. The cooling and second heating curves were recorded.

Ultimate tensile strength at yield and elongation at break were measured according to ASTM D-638-03. Both measurements were performed at 23°C on die cut D638-type IV specimens.

Surface tension was measured in accordance with DIN 53364 (1986). Arcotec test inks were used, which are fluids of defined surface tension, and are available in ranges from 28 to 56 mN/m.

Sheet hardness properties were measured according to ASTM D2240-05. The tensile properties were determined according to standard test method ASTM D638-03.

Melt tension was measured on selected polymer samples on a Gottfert Rheotens at a temperature of 190°C. The Rheotens is composed of two counter rotating wheels which pull a molten strand extruded from a capillary die at a constant velocity. The wheels are equipped with a balance to measure the stress response of the melt as the wheels accelerate. The wheels are allowed to accelerate until strand rupture. The force to break the strand is taken as the melt tension in centiNewtons (cN).

RR ($V_{0.1}$ /$V_{100}$) was determined by examining samples using melt rheology techniques on a Rheometric Scientific, Inc.. ARES (Advanced Rheometric Expansion System) dynamic mechanical spectrometer (DMS). The samples were examined at 190°C, using the dynamic frequency mode and 25 millimeter (mm) diameter parallel plate fixtures with a 2 mm gap. With a strain rate of 8% and an oscillatory rate that is incrementally increased from 0.1 to 100 rad/sec, five data points taken for each decade of frequency analyzed. Each sample (either pellets or bale) is compression molded into 3 inch (1.18 centimeter (cm)) plaques ⅛ inch (0.3175cm) thick at 20,000 psi (137.9 megapascals (MPa)) pressure for 1 minute at 180°C. The plaques are quenched and cooled (over a period of 1 minute) to room temperature. A 25 mm plaque is cut from the center portion of the larger plaque. These 25 mm diameter aliquots are then inserted into the ARES at 190°C, and allowed to equilibrate for five minutes prior to initiation of testing. The samples are maintained in a nitrogen environment throughout the analyses to minimize oxidative degradation. Data reduction and manipulation are accomplished by the ARES2/A5:RSI Orchestrator Windows 95 based software package. RR measures the ratio of the viscosity versus shear rate curve.

Interpolymer Mooney Viscosity, MV, (ML 1+4 at 125°C) was measured in accordance with American Society for Testing and Materials test D 1646-94 (ASTM D 1646-94). The PRR is calculated from the MV and the RR, in accordance with the formula as provided PRR =RR + [3.82 - interpolymer Mooney Viscosity ($ML_{1+4}$ at 125°C)] x 0.3. ML refers to Mooney Large Rotor. This Mooney Viscosity may also be measured in accordance with the current test method, ASTM D 1646-04. The viscometer is a Monsanto MV2000 instrument.

In reference to the rheology-modified, substantially gel-free thermoplastic elastomer composition, as discussed above, the following definitions and test methods apply.

Shear thinning index (STI), as used herein, is a ratio of polymer viscosity at a specified low shear rate divided by polymer viscosity at a specified high shear rate. For ethylene/alpha-olefin (EAO) polymers, a conventional STI test temperature is 190°C. Polymer viscosity is conveniently measured in poise (dyne-second/square centimeter ($cm^2$)) at shear rates within a range from 0.1 radian per second (rad/sec) to 100 rad/sec and at 190°C, under a nitrogen atmosphere, using a dynamic mechanical spectrometer such as an RMS-800 or ARES from Rheometrics. Shear thinning index is the ratio of the "polymer viscosity at 0.1 rad/sec" to the "polymer viscosity at 100 rad/sec."

Melt strength (MS), as used herein, is a maximum tensile force, in centiNewtons (cN), measured on a molten filament of a polymer melt extruded from a capillary rheometer die at a constant shear rate of 33 reciprocal seconds ($sec^{-1}$), while the filament is being stretched by a pair of nip rollers that are accelerating the filament at a rate of 0.24 centimeters per second per second ($cm/sec^2$), from an initial speed of 1 cm/sec. The molten filament is preferably generated by heating 10 grams (g) of a polymer that is packed into a barrel of an Instron capillary rheometer, equilibrating the polymer at 190°C for five minutes (min), and then extruding the polymer at a piston speed of 2.54 cm/min through a capillary die with a diameter of 0.21 cm and a length of 4.19 cm. The tensile force is preferably measured with a Goettfert Rheotens that is located, so that the nip rollers are 10 cm directly below a point at which the filament exits the capillary die.

Solidification temperature (ST), as used herein, is the temperature of the highest temperature peak endotherm, measured during cooling (in °C), with a differential scanning calorimeter (DSC), such as that sold by TA Instruments, Inc., as the polymer is first heated at a rate of 10°C/minute (min), from ambient temperature, to a temperature of 200°C, then cooled at a rate of 10°C/min to a temperature of -30°C, and then typically reheated at a rate of 10°C/min to a temperature of 200°C.

Upper service temperature (UST), as used herein, is that temperature (°C) at which a thermomechanical analyzer (TMA) penetration probe penetrates a specimen having a thickness of two to three millimeters (mm) to a depth of 900 micrometers ($\mu m$). A suitable TMA is produced by TA Instruments, Inc.. A one Newton (N) force is applied to the penetration probe, as it rests on a surface of the specimen that is in a chamber where temperature is ramped at a rate of 5°C/min.

The following examples illustrate the invention, but do not, either explicitly or by implication, limit the present invention.

EXPERIMENTAL EXAMPLES

Compositions

The experimental compositions are listed in Table 2.

ENR86 (or EAO-2) is a random ethylene/butene-1 copolymer, and is described in Table 1 (see EAO-2).

TPU35 is a polybutadiene diol-based polyurethane, with a density less than 1.0 g/cc, a Tg of -35°C, and a softening point of 90°C. TPU 35 as 35 weight percent hard segment and a melt index, I2, of 17 g/10 min (ASTM D-1238, 190°C/2.16 kg).

Compositions 1 and 2 show excellent gloss values in comparison to Composition 3 (75 wt% of the TPU) and Composition 4 (100% of the ENR86), indicating that critical levels of both components are needed to reduce gloss. The compositions did not contain a compatibilizer.

Table 2: Composition and Properties (amounts in weight percentage)

| Composition | 1 | 2 | 3 | 4 |
|---|---|---|---|---|
| ENR86<br>TPU35 (17 MI) | 75%<br>25% | 50%<br>50% | 25%<br>75% | 100%<br>0 |
| Tensile, MPa, machine direction | 17 | 13 | 17 | 34.9 |
| Tensile, MPa cross machine direction | 14.9 | 11.2 | 11 | 32.3 |
| Elongation machine direction | 125 | 100 | 145 | 750 |
| Elongation cross machine direction | 130 | 105 | 130 | 760 |
| Die C tear, lbf/inch<br>(N/mm) | 80<br>(14.04) | 67.3<br>(11.79) | 58<br>(10.16) | 77.8<br>(13.62) |
| % Gloss, 60 degrees | 3.1 | 6.4 | 61.4 | 104 |
| Surface Tension, dynes/cm | 44 | 46 | 41 | 28 |
| DSC, Tc | 79.85 | 79.75 | 79.26 | 78.3 |
| DSC, Tm | 92.73 | 93.15 | 92.73 | 93 |
| DSC, % crystallinity | 14.09 | 11.87 | 7.551 | 29 |
| Density, g/cc | 0.9185 | 0.9415 | 0.9649 | 0.901 |
| $I_2$ (190°C / 2.16 kg) | 0.89 | 4.481 | 11.509 | < 0.5 |
| $I_{10}$ (190°C / 10.0 kg) | 11.01 | 33.65 | 78.68 | 3.9 |

*Representative Blending and Sheet Extrusion*

The TPU35 (17 MI) was dried at 80°C, overnight, and then tumble blended with the ENR86. The tumble blended mixture was then compounded (melt homogenized) on a WP-zsk-25 extruder, using the conditions shown in Table 3 below. The extruder conditions were as follows: zone 1 = 90, zone 2 = 120, zone 3 = 130, zone 4 = 130, zone 5 = 130, zone 6 = 130, zone 7 = 130, Die (zone 8) = 140 (all °C).

Table 3: Compounding Conditions

| | #1 (75/25 ENR86/TPU35) | #2 (50/50 ENR86/TPU35) | #3 (25/75 ENR86/TPU35) |
|---|---|---|---|
| Extruder, RPM | 400 | 550 | 250 |
| % torque | 67 | 73 | 85 |
| Die Pressure, psi<br>(MPa) | 224<br>(1.545) | 500<br>(3.447) | 900<br>(6.205) |

(continued)

| | #1 (75/25 ENR86/TPU35) | #2 (50/50 ENR86/TPU35) | #3 (25/75 ENR86/TPU35) |
|---|---|---|---|
| Melt Temp, °C | 213 | 194 | 166 |

The extrusion into sheeting took place several weeks after the compounding step. Thus, prior to the extrusion, the compounded blend was dried at 80°C, overnight, to eliminate moisture (such moisture causes blistering during sheet production), before the blend was extruded into 0.010-0.015 inch (250-380 μm) thick sheeting. The sheet extrusion conditions were as follows: 3 roll stack, Kilion extruder, zone 1 = 140, zone 2 = 166, zone 3 = 177, zone 4 = 182, Die = 175 (all °C); 20 mils thick sheeting produced.

The extruded sheeting was observed to be lower in gloss than traditional TPO sheeting (advantage in some cases where low gloss is desired), and the sheeting had better scratch/mar resistance than traditional TPO sheeting. Also, the 50/50 composition had excellent adhesion to a polyurethane foam, as discussed below.

Additional Compositions

Additional compositions are provided below in Table 4. These compositions were prepared by feeding the components to a twin screw extruder under conditions shown in Table 5, to form sheets.

Table 4: Additional Compositions

| Composition | 5 | 6 | 7 |
|---|---|---|---|
| ENR86 (wt%)<br>TPU35 (1 MI) (wt%) | 75%<br>25% | 63%<br>37% | 50%<br>50% |
| Tensile, MPa, machine direction | 15.8 | 11.0 | 7.9 |
| Tensile, MPa cross machine direction | 14.7 | 7.9 | 5.4 |
| Elongation % machine direction | 390 | 500 | 240 |
| Elongation % cross machine direction | 602 | 500 | 300 |
| Die C Tear, MD, N/mm | 68.4 | 57 | 52 |
| Die C Tear, CD, N/mm | 27.5 | 30.5 | 15.1 |
| Shore A Hardness | 77 | 78 | 54 |
| Surface Tension, dynes/cm | 44 | 46 | 41 |
| DIN Abrasion, $mm^3$ loss | 78 | 218 | 441 |
| %60 gloss (grain side) | 4.3 | 4.6 | 4.6 |
| %60 gloss (smooth side) | 4.7 | 5.0 | 5.7 |
| Surface tension - smooth side | 42 | 48 | 38 |

Table 5: Processing Conditions

| Samples | 5-7 |
|---|---|
| Extruder | W-P ZSK 25 |
| Zone 1°C | 140 |
| Zone 2°C | 170 |
| Zone 3°C | 175 |
| Zone 4°C | 180 |
| Zone 5°C | 180 |
| Zone 6°C | 180 |

(continued)

| Samples | 5-7 |
|---|---|
| Zone 7°C | 180 |
| Zone 8°C | |
| Die °C | 190 |
| RPM | 500 |
| % torque | 65 |
| amps | |
| Die pressure (psi) (MPa) | 435 (3.00) |
| Melt °C | 214 |
| Lb./h (kg/h) | 50 (22.7) |

As can be seen from the results in Table 4, the compositions have excellent mechanical properties, including high elongation values, and excellent tensile strengths. The compositions (sheets) also have low gloss values. Better tensile and elongation properties are shown for the compositions containing the "63 weight percent" and the "75 weight percent" ENR86, as compared to the composition containing "50 weight percent" ENR86.

<u>Adhesion Test</u>

*Representative Procedure*

An extruded sheet (20 cm x 20 cm) of the 50/50 (ENR86/TPU35(17 MI)) composition, as described in Table 2 above, was secured to the backside of individual automotive instrument panel cover skins. The skins were inserted into a foam mold with a rigid injection molded substrate. A polyurethane foam was injected between the skin and substrate. The sample was allowed to cure for approximately 24 hours prior to testing. The sample was then subjected to a foam peel test.

Samples were tested in accordance with IS02411, Ford Lab Test Method (FLTM) BN-151-06, using the following test conditions:

a) Room temperature 23°C
b) Manual hand held test method,
c) Sample width - 25 mm,
d) Three samples per material,
e) Unit of measure: Newton per meter,
f) Minimum performance: 175N,
g) Material #1: 50/50 ENR86/TPU35,
h) Material #2: Renosol polyurethane foam, 10 lb (4.5 kg) density,
i) Test instrument: Chatillon digital hand-held force gauge, Model DFIS-50, s/n 25546 (calibration due date 3/15/05)

Adhesion results are shown in Table 6.

Table 6: Foam Adhesion Results

| Material Blend | Adhesion Results |
|---|---|
| 75% ENR86 / 25% TPU35 (17MI) | Pass 360N |
| 50% ENR86 / 50% TPU35 (17MI) | Pass 334N with 100% cohesive foam failure |
| 25% ENR86 / 75% TPU35 (17MI) | Pass 340N with 100% cohesive foam failure |

As shown from the above table, all of the samples tested exhibited a strong adhesion to the foam. Figure 1 shows the surface area of the representative sample (50/50 ENR86/TPU35(17MI)). As indicated in this figure, the failure

was 100% cohesive in nature, and within the polyurethane foam. This result is evidence of a strong adhesion between the sheet, formed from the composition of the invention, and the foam

This test procedure was repeated, except a compression molded sheet of the 50/50 composition was used in place of an extruded sheet. In this case, a 75% cohesive failure was observed within the polyurethane foam, and a 25% adhesive failure was observed at the sheet/foam interface. This result is also evident of a strong adhesion between the sheet formed from the composition of the invention and the polyurethane foam.

Morphology

The morphology of the extruded sheets, prepared from the 50/50, 75/25 and 25/75 (ENR86/TPU35(17MI)) compositions, as described in Table 2, were examined by Transmission Electron Microscopy (TEM). Micrographs are shown in Figures 3-8.

*Sample Preparation, Analysis and Results*

The sample was cut near the center of the sheet and trimmed at the core, parallel to the flow direction. The trimmed block was faced-off and sectioned with a diamond knife on a Leica UCT microtome, equipped with a FCS cryosectioning chamber. The sections were cut at -70°C to a thickness of approximately 100 nm. The sections were placed on 400 mesh virgin copper grids, and post stained with the vapor phase of an aqueous 0.5% ruthenium tetraoxide solution for approximately 10 minutes.

TEM - Bright field TEM imaging was done on a JEOL JEM-1230 transmission electron microscope, operated at 100kV accelerating voltage. Images were captured using Gatan 791 and 794 digital camera, and processed using Adobe Photoshop 7.0 software. The results are as follows.

Figures 3 and 4 correspond to the 50/50 (ENR86/TPU35(17MI)) composition. Images showed that the morphology was comprised of a continuous TPU matrix, with discrete ENR domains, ranging from 0.5 microns to greater than 18 microns, in length, dispersed within the TPU matrix. The grey regions within the EO domains are TPU occlusions and the brightest regions in the section are holes from partial de-bonding of the two resins.

Figures 5 and 6 correspond to the 75/25 (ENR86/TPU35(17MI)) composition. Images showed that the morphology was comprised of a continuous ENR matrix, with oriented TPU domains, ranging from 0.5 microns to greater than 29 microns, in length, dispersed within the ENR matrix. Brightest regions (arrowed) are holes from some de-bonding of the two resins.

Figures 7 and 8 correspond to the 25/75 (ENR86/TPU35(17MI)) composition. Images showed that the morphology was comprised of a continuous TPU matrix, with non-oriented ENR domains, ranging from 0.5 microns to 8.7 microns, in length, dispersed within the TPU matrix. Brightest regions (arrowed) are holes from some de-bonding of the two resins.

In these samples, little interfacial debonding or pullout was observed between the two phases. This is an unexpected finding, since typically massive amounts of interfacial debonding an pullout is observed in uncompatibilized polyolefin/polyurethane blends.

Melt Strength

The melt strength of the 50/50 (ENR86/TPU35(17MI)) varied, from close to zero, to about 2 cN. This composition is suitable for an adhesive backing on a higher melt strength thermoplastic polyolefin. Such an adhesive backing may be co-extruded with the thermoplastic polyolefin, and may have a thickness from 0.001 to 0.005 inch (25 to 125 $\mu$m).

## Claims

1. An automotive part, comprising at least one component prepared from a composition comprising at least one ethylene/$\alpha$-olefin random interpolymer and at least one polydiene diol-based polyurethane, and wherein the at least one ethylene/$\alpha$-olefin interpolymer has a PRR from 8 to 70, and a density less than, or equal to, 0.93 g/cc using ASTM D792-00, method B.

2. An automotive part of Claim 1, wherein the part is an automotive interior part.

3. An automotive part of Claim 1, wherein the part is an instrument panel skin.

4. An automotive part of Claim 1, wherein the part is a door panel skin.

5. An automotive part of Claim 1, wherein the part is a foamed laminated sheet.

6. An automotive part of Claim 1, wherein the part is an automotive interior part comprising a film comprising at least two layers or plies, and wherein at least one layer or ply is formed from a said composition.

7. An automotive part of Claim 1, wherein the part is an instrument panel comprising a film comprising at least two layers or plies, and wherein at least one layer or ply is formed from a said composition.

8. An automotive part of Claim 1, wherein the part is a door panel comprising a film comprising at least two layers or plies, and wherein at least one layer or ply is formed from a said composition.

9. An automotive part of Claim 1, wherein the part is an interior automotive part comprising at least one component formed from the following: (a) a film comprising at least two layers or plies, and wherein at least one layer or ply is formed from a said composition, and (b) a polyurethane foam.

10. An automotive part of Claim 9, wherein the film is adhered to a surface of the polyurethane foam.

11. An automotive part of Claim 10, wherein the part is an instrument panel.

12. An automotive part of Claim 10, wherein the adhesion between the film and the polyurethane foam is stronger than the adhesion between the foam and another film, prepared from a composition comprising the same components as the film, except the polydiene diol-based polyurethane.

13. An automotive part of any one of the preceding claims, wherein the PRR is 18 to 50.

14. An automotive part of any one of the Claims 1 to 12, wherein the polyurethane is formed from a polydiene diol, an isocyanate and an aliphatic chain extender.

15. An automotive part of any one of the Claims 1 to 12, wherein the polydiene diol-based polyurethane is hydrogenated.

**Patentansprüche**

1. Ein Fahrzeugteil, das mindestens eine Komponente beinhaltet, die aus einer Zusammensetzung hergestellt ist, die mindestens ein statistisches Ethylen/α-Olefin-Interpolymer und mindestens ein auf Polydiendiol basierendes Polyurethan beinhaltet, und wobei das mindestens eine Ethylen/α-Olefin-Interpolymer Folgendes aufweist: ein PRR von 8 bis 70 und eine Dichte von weniger als oder gleich 0,93 $g/cm^3$, unter Verwendung von ASTM D792-00, Verfahren B.

2. Fahrzeugteil gemäß Anspruch 1, wobei das Teil ein Fahrzeuginnenteil ist.

3. Fahrzeugteil gemäß Anspruch 1, wobei das Teil eine Instrumententafelhaut ist.

4. Fahrzeugteil gemäß Anspruch 1, wobei das Teil eine Türverkleidungshaut ist.

5. Fahrzeugteil gemäß Anspruch 1, wobei das Teil ein Schaumschichtstoff ist.

6. Fahrzeugteil gemäß Anspruch 1, wobei das Teil ein Fahrzeuginnenteil ist, das einen Film beinhaltet, der mindestens zwei Schichten oder Lagen beinhaltet, und wobei mindestens eine Schicht oder Lage aus einer besagten Zusammensetzung gebildet ist.

7. Fahrzeugteil gemäß Anspruch 1, wobei das Teil eine Instrumententafel ist, die einen Film beinhaltet, der mindestens zwei Schichten oder Lagen beinhaltet, und wobei mindestens eine Schicht oder Lage aus einer besagten Zusammensetzung gebildet ist.

8. Fahrzeugteil gemäß Anspruch 1, wobei das Teil eine Türverkleidung ist, die einen Film beinhaltet, der mindestens zwei Schichten oder Lagen beinhaltet, und wobei mindestens eine Schicht oder Lage aus einer besagten Zusammensetzung gebildet ist.

9. Fahrzeugteil gemäß Anspruch 1, wobei das Teil ein Innenfahrzeugteil ist, das mindestens eine Komponente beinhaltet, die aus Folgendem gebildet ist: (a) einem Film, der mindestens zwei Schichten oder Lagen beinhaltet, und wobei mindestens eine Schicht oder Lage aus einer besagten Zusammensetzung gebildet ist, und (b) einem Polyurethanschaum.

10. Fahrzeugteil gemäß Anspruch 9, wobei der Film an einer Oberfläche des Polyurethanschaums zur Haftung gebracht wird.

11. Fahrzeugteil gemäß Anspruch 10, wobei das Teil eine Instrumententafel ist.

12. Fahrzeugteil gemäß Anspruch 10, wobei die Haftung zwischen dem Film und dem Polyurethanschaum stärker ist als die Haftung zwischen dem Schaum und einem weiteren Film, hergestellt aus einer Zusammensetzung, die die gleichen Komponenten wie der Film, mit Ausnahme des auf Polydiendiol basierenden Polyurethans, beinhaltet.

13. Fahrzeugteil gemäß einem der vorhergehenden Ansprüche, wobei das PRR 18 bis 50 beträgt.

14. Fahrzeugteil gemäß einem der Ansprüche 1 bis 12, wobei das Polyurethan aus einem Polydiendiol, einem Isocyanat und einem aliphatischen Kettenverlängerer gebildet ist.

15. Fahrzeugteil gemäß einem der Ansprüche 1 bis 12, wobei das auf Polydiendiol basierende Polyurethan hydriert ist.

## Revendications

1. Une pièce pour véhicule automobile, comprenant au moins un composant préparé à partir d'une composition comprenant au moins un interpolymère aléatoire d'éthylène/$\alpha$-oléfine et au moins un polyuréthane à base de polydiènediol, et dans laquelle cet au moins un interpolymère d'éthylène/$\alpha$-oléfine présente un PRR allant de 8 à 70 et une densité inférieure ou égale à 0,93 g/$cm^3$ selon ASTM D792-00, méthode B.

2. Une pièce pour véhicule automobile de la revendication 1, la pièce étant une pièce pour intérieur de véhicule automobile.

3. Une pièce pour véhicule automobile de la revendication 1, la pièce étant une peau de tableau de bord.

4. Une pièce pour véhicule automobile de la revendication 1, la pièce étant une peau de panneau de porte.

5. Une pièce pour véhicule automobile de la revendication 1, la pièce étant une feuille de mousse laminée.

6. Une pièce pour véhicule automobile de la revendication 1, la pièce étant une pièce pour intérieur de véhicule automobile comprenant un film constitué d'au moins deux couches ou strates, et au moins une couche ou strate étant formée à partir d'une dite composition.

7. Une pièce pour véhicule automobile de la revendication 1, la pièce étant un tableau de bord comprenant un film constitué d'au moins deux couches ou strates, et au moins une couche ou strate étant formée à partir d'une dite composition.

8. Une pièce pour véhicule automobile de la revendication 1, la pièce étant un panneau de porte comprenant un film constitué d'au moins deux couches ou strates, et au moins une couche ou strate étant formée à partir d'une dite composition.

9. Une pièce pour véhicule automobile de la revendication 1, la pièce étant une pièce pour intérieur de véhicule automobile comprenant au moins un composant formé à partir de ce qui suit : (a) un film constitué d'au moins deux couches ou strates, et au moins une couche ou strate étant formée à partir d'une dite composition, et (b) une mousse de polyuréthane.

10. Une pièce pour véhicule automobile de la revendication 9, dans laquelle le film est collé à une surface de la mousse de polyuréthane.

11. Une pièce pour véhicule automobile de la revendication 10, la pièce étant un tableau de bord.

12. Une pièce pour véhicule automobile de la revendication 10, dans laquelle l'adhérence entre le film et la mousse de polyuréthane est plus forte que l'adhérence entre la mousse et un autre film, préparé à partir d'une composition comprenant les mêmes composants que le film, excepté le polyuréthane à base de polydiène-diol.

13. Une pièce pour véhicule automobile d'une quelconque des revendications précédentes, dans laquelle le PRR est de 18 à 50.

14. Une pièce pour véhicule automobile d'une quelconque des revendications 1 à 12, dans laquelle le polyuréthane est formé à partir d'un polydiène-diol, d'un isocyanate et d'un allongeur de chaîne aliphatique.

15. Une pièce pour véhicule automobile d'une quelconque des revendications 1 à 12, dans laquelle le polyuréthane à base de polydiène-diol est hydrogéné.

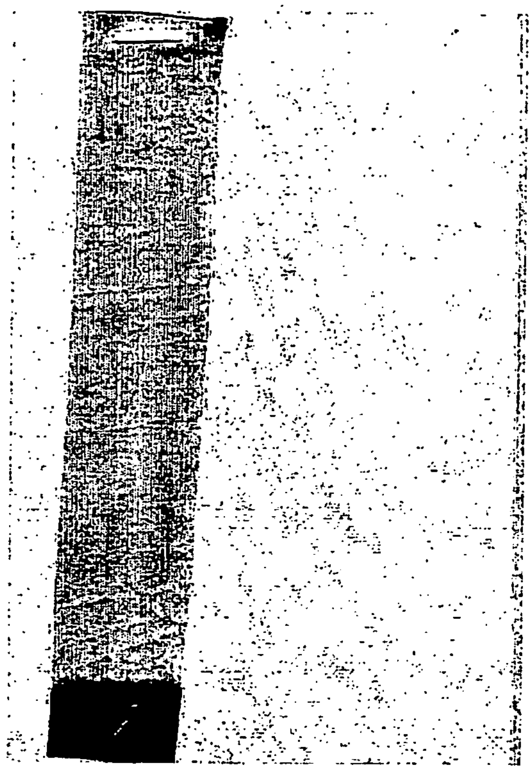

FIGURE 1

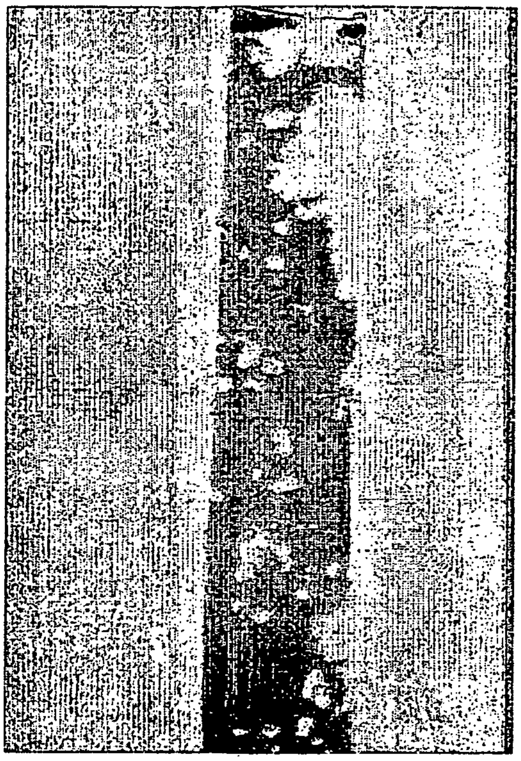

FIGURE 2

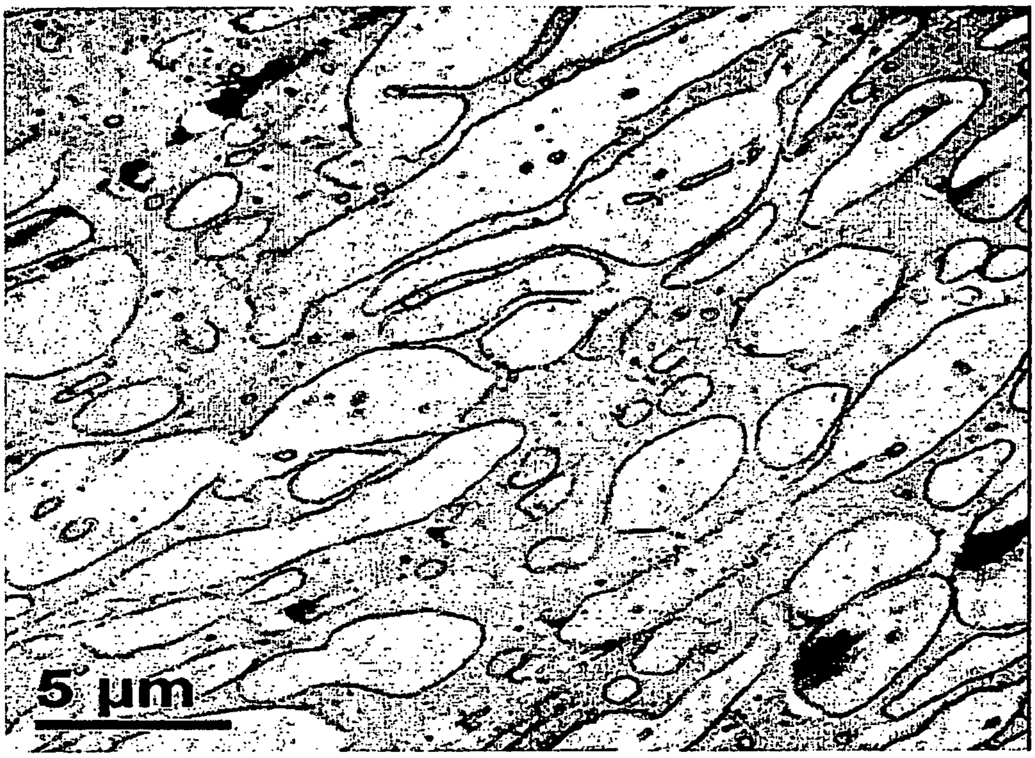


FIGURE 3

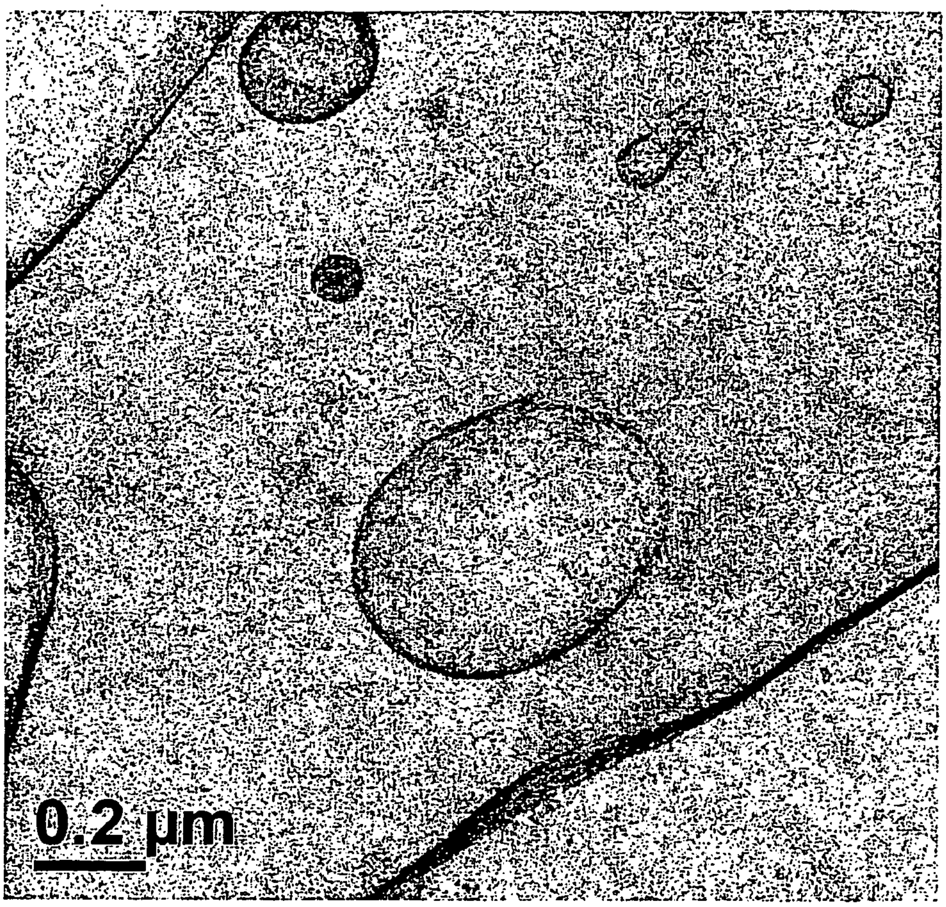


FIGURE 4

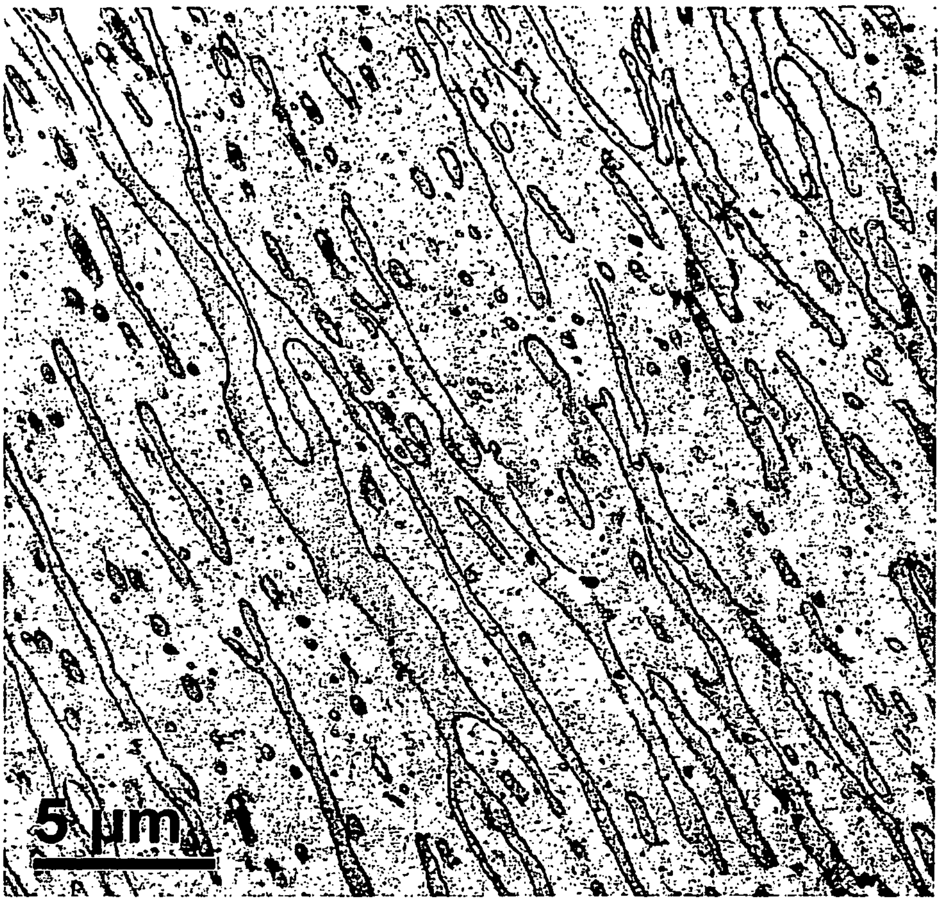


FIGURE 5

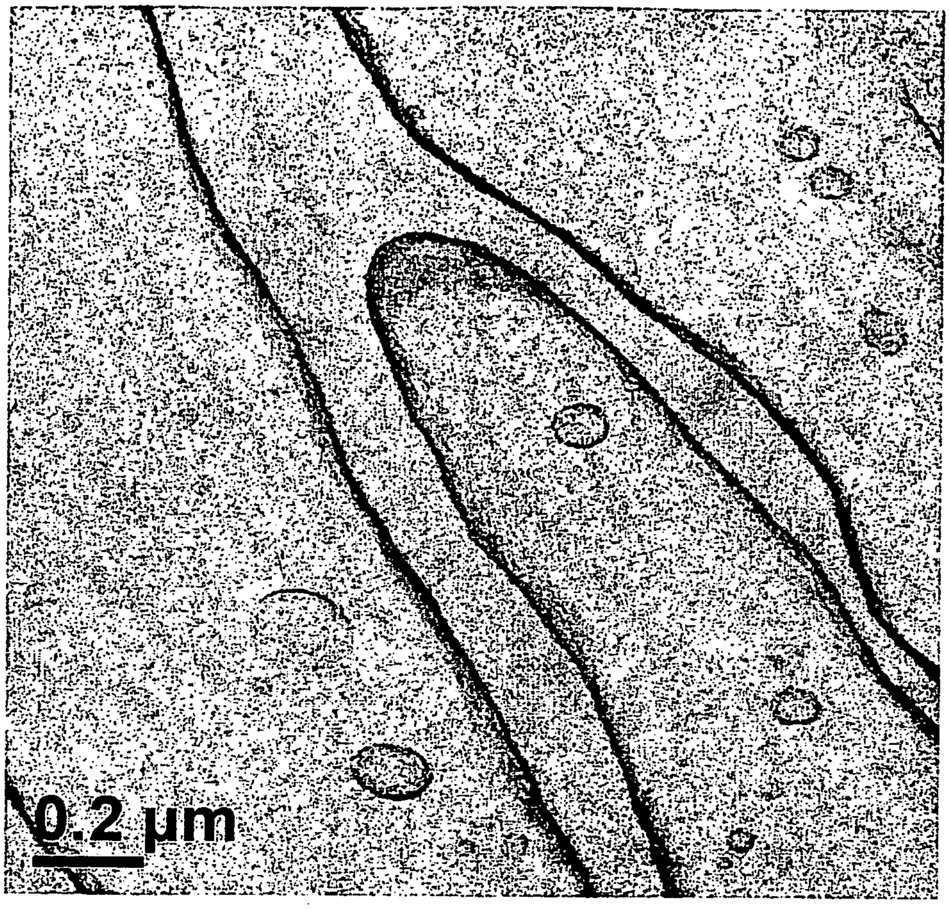


FIGURE 6

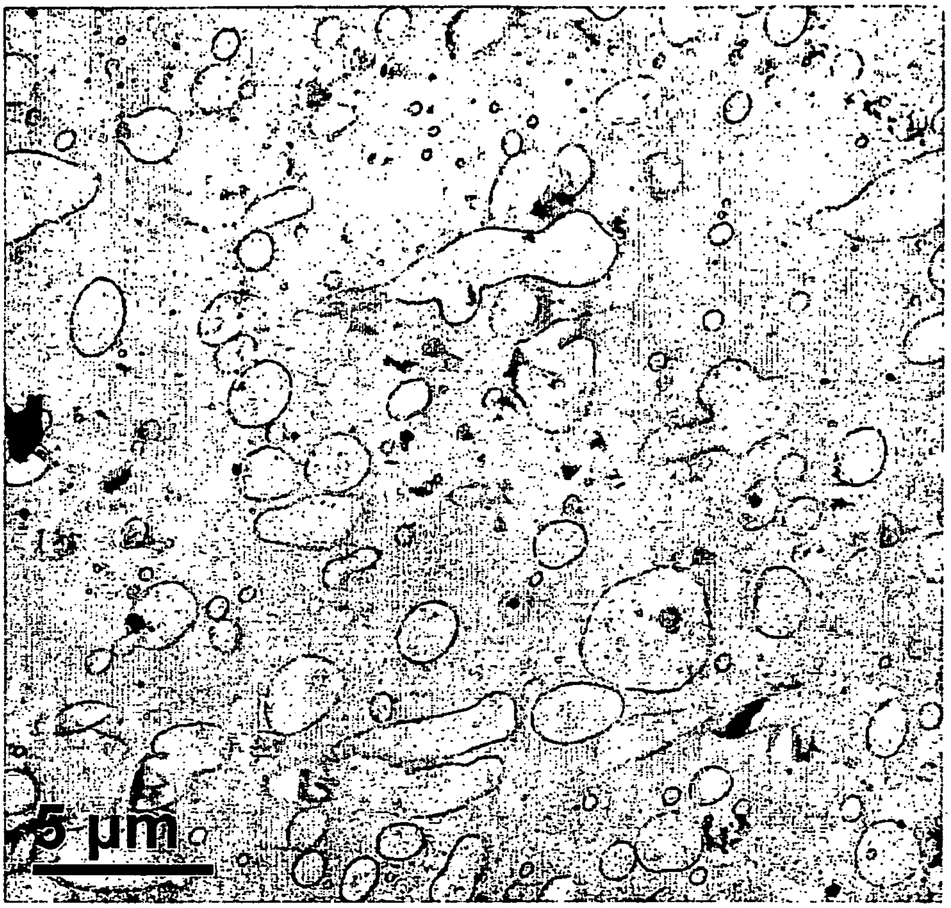


FIGURE 7

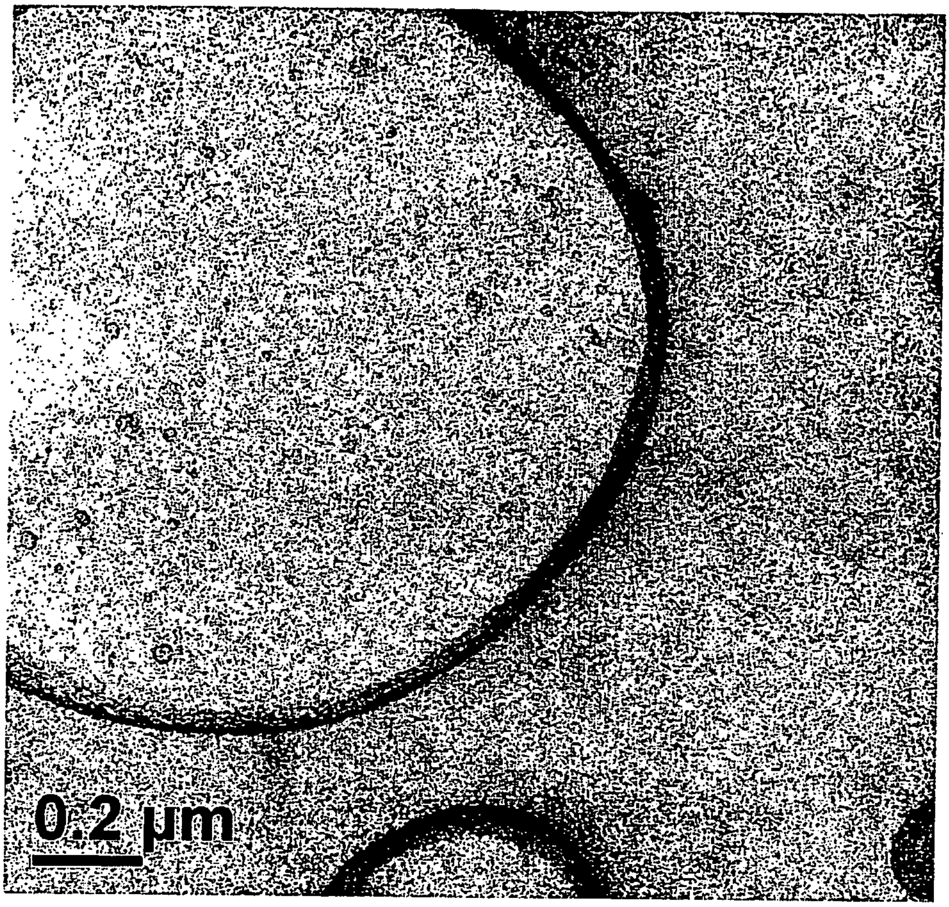


FIGURE 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5902854 A
- WO 2005090426 A
- WO 2006102154 A
- US 6156842 A
- EP 1926773 A
- EP 06814482 A
- US 6414081 B
- US 5623019 A
- US 6251982 B
- US 5364908 A
- US 6506842 B
- US 3821143 A
- US 6300451 B
- US 6372847 B
- US 5278272 A
- US 5272236 A
- US 6680361 B
- WO 0026268 A
- US 6369176 B
- US 6369176 A
- US 6054544 A
- US 6335410 A
- US 6723810 A
- US 3645992 A, Elston
- US 4076698 A, Anderson
- US 4039593 A, Kamienski
- US 4385133 A
- US 4522975 A
- US 5167899 A
- WO 9902603 A
- EP 0994919 B1
- US 5039755 A
- US 5229464 A
- US 5864001 A


### Non-patent literature cited in the description


- **P. DOERPINGHAUS ; D. BAIRD.** Separating the Effects of Sparse Long-Chain Branching on Rheology from Those Due to Molecular Weight in Polyethylenes. *The Journal of Rheology,* May 2003, vol. 47 (3), 717-736
- **KOHLER.** *J. Am. Chemical Soc.,* 1927, vol. 49, 31-81
- **PYTELA et al.** Novel Polybutadiene Diols for Thermoplastic Polyurethanes, International Polyurethane Conference. *PULat. Am.,* 2001
- **PYTELA et al.** Novel Thermoplastic Polyurethanes for Adhesives and Sealants. *Adhesives & Sealant Industry,* June 2003, 45-51